(19) Europäisches Patentamt / European Patent Office / Office européen des brevets

(11) **EP 2 834 316 B1**

(12) **FASCICULE DE BREVET EUROPEEN**

(45) Date de publication et mention
de la délivrance du brevet:
**14.06.2017 Bulletin 2017/24**

(21) Numéro de dépôt: **13719945.1**

(22) Date de dépôt: **29.03.2013**

(51) Int Cl.:
**C09K 5/04** *(2006.01)*    **C07C 21/18** *(2006.01)*

(86) Numéro de dépôt international:
**PCT/FR2013/050693**

(87) Numéro de publication internationale:
**WO 2013/150225 (10.10.2013 Gazette 2013/41)**

(54) **COMPOSITIONS A BASE DE 2,3,3,4,4,4-HEXAFLUOROBUT-1-ENE**

ZUSAMMENSETZUNGEN AUF BASIS VON 2,3,3,4,4,4-HEXAFLUOROBUT-1-EN

COMPOSITIONS CONTAINING 2,3,3,4,4,4-HEXAFLUOROBUT-1-ENE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.04.2012 FR 1253096**

(43) Date de publication de la demande:
**11.02.2015 Bulletin 2015/07**

(73) Titulaire: **Arkema France
92705 Colombes (FR)**

(72) Inventeur: **RACHED, Wissam
F-69630 Chaponost (FR)**

(74) Mandataire: **Chahine, Audrey Claire et al
Arkema France
420, rue d'Estienne d'Orves
92705 Colombes Cedex (FR)**

(56) Documents cités:
**WO-A1-2009/085937    US-A1- 2009 143 604**

**Description**

DOMAINE DE L'INVENTION

La présente invention concerne des compositions à base de 2,3,3,4,4,4-hexafluorobut-1-ène, ainsi que leur utilisation notamment en tant que fluides de transfert de chaleur.

ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est toutefois nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

Le document US 2009/0143604 décrit des procédés de fabrication de fluoroalcanols et de fluorooléfines. La synthèse du 2,3,3,4,4,4-hexafluorobut-1-ène (HFO-1336yf) est notamment exposée.

Le document WO 2009/085937 décrit un système de boucle de refroidissement secondaire pour un système de climatisation. Parmi les composés de transfert de chaleur susceptibles d'être utilisés figure le HFO-1336yf.

Le document US 2009/0302264 décrit des compositions de transfert de chaleur comprenant un fluide de transfert de chaleur, un lubrifiant et un désactivateur acide. Le HFO-1336yf est cité parmi les fluides de transfert de chaleur possibles.

Le document US 2011/0088418 décrit des compositions comprenant un liquide ionique et une fluorooléfine, utiles pour les applications de transfert de chaleur avec des systèmes à absorption. Le HFO-1336yf est cité comme exemple de fluorooléfine.

Toutefois, il existe encore un besoin de mettre au point d'autres fluides de transfert de chaleur présentant un GWP relativement faible, et susceptibles de remplacer les fluides de transfert de chaleur usuels.

En particulier, il est souhaitable de mettre au point d'autres fluides de transfert de chaleur à bas GWP qui soient quasi-azéotropiques et / ou qui présentent de bonnes performances énergétiques par rapport à des fluides de transfert de chaleur usuels (tel que l'isobutane) et / ou des performances énergétiques améliorées par rapport aux fluides de transfert de chaleur à bas GWP connus.

RESUME DE L'INVENTION

L'invention concerne en premier lieu une composition comprenant du 2,3,3,4,4,4-hexafluorobut-1-ène en mélange avec un ou plusieurs composés hydrocarbure, hydrofluorocarbure, éther, hydrofluoroéther ou fluorooléfine présentant un point d'ébullition inférieur ou égal à 0°C. Le ou les composés hydrocarbure, hydrofluorocarbure, éther, hydrofluoroéther ou fluorooléfine présentant un point d'ébullition inférieur ou égal à 0°C sont choisis parmi le 1,3,3,3-tétrafluoropropène, le 2,3,3,3-tétrafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le 1,1,1,2,3,3,3-heptafluoropropane, le 1,1-difluoroéthane, le 1,1,1-trifluoropropane, l'isobutane, le propane, et les mélanges de ceux-ci. Ainsi, l'invention concerne une composition comprenant du 2,3,3,4,4,4-hexafluorobut-1-ène en mélange avec un ou plusieurs composés choisi (s) parmi le 1,3,3,3-tétrafluoropropène, le 2,3,3,3-tétrafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le 1,1,1,2,3,3,3-heptafluoropropane, le 1,1-difluoroéthane, le 1,1,1-trifluoropropane, l'isobutane, le propane, et les mélanges de ceux-ci.

Selon un mode de réalisation, la composition consiste en un mélange de 2,3,3,4,4,4-hexafluorobut-1-ène et d'un ou plusieurs composés hydrocarbure, hydrofluorocarbure, éther, hydrofluoroéther ou fluorooléfine présentant un point d'ébullition inférieur ou égal à 0°C.

Selon un mode de réalisation, la composition est un mélange binaire de composés ; ou est un mélange ternaire de composés.

Selon un mode de réalisation, la composition est un mélange binaire de 2,3,3,4,4,4-hexafluorobut-1-ène avec un composé hydrocarbure, hydrofluorocarbure, éther, hydrofluoroéther ou fluorooléfine présentant un point d'ébullition inférieur ou égal à 0°C ; ou est un mélange ternaire de 2,3,3,4,4,4-hexafluorobut-1-ène avec un premier composé hydrocarbure, hydrofluorocarbure, éther, hydrofluoroéther ou fluorooléfine présentant un point d'ébullition inférieur ou égal à 0°C et avec un deuxième composé hydrocarbure, hydrofluorocarbure, éther, hydrofluoroéther ou fluorooléfine présentant un point d'ébullition inférieur ou égal à 0°C.

Selon un mode de réalisation, le ou les composés hydrocarbure, hydrofluorocarbure, éther, hydrofluoroéther ou fluorooléfine présentant un point d'ébullition inférieur ou égal à 0°C présentent un point d'ébullition inférieur ou égal à -5°C, de préférence inférieur ou égal à -10°C.

Selon un mode de réalisation, le ou les composés hydrocarbure, hydrofluorocarbure, éther, hydrofluoroéther ou fluorooléfine présentant un point d'ébullition inférieur ou égal à 0°C sont choisis parmi le 1,3,3,3-tétrafluoropropène, le 2,3,3,3-tétrafluoropropène, le 1,1,1,2-tétrafluoroéthane, le 1,1,2,2-tétrafluoroéthane, le 1,1-difluoroéthane, le 1,1,1-trifluoropropane et les mélanges de ceux-ci.

Selon un mode de réalisation, la composition comprend ou de préférence consiste en :

- un mélange de 2,3,3,4,4,4-hexafluorobut-1-ène et de 1,3,3,3-tétrafluoropropène ; ou
- un mélange de 2,3,3,4,4,4-hexafluorobut-1-ène et de 1,1,1-trifluoropropane ; ou
- un mélange de 2,3,3,4,4,4-hexafluorobut-1-ène et de 1,1,2,2-tétrafluoroéthane ; ou
- un mélange de 2,3,3,4,4,4-hexafluorobut-1-ène et de 1,1,1,2-tétrafluoroéthane ; ou
- un mélange de 2,3,3,4,4,4-hexafluorobut-1-ène et de 1,1-difluoroéthane ; ou
- un mélange de 2,3,3,4,4,4-hexafluorobut-1-ène, de 1,1,1,2-tétrafluoroéthane et de 1,3,3,3-tétrafluoropropène ; ou
- un mélange de 2,3,3,4,4,4-hexafluorobut-1-ène, de 1,1,1,2-tétrafluoroéthane et de 1,1,1-trifluoropropane ;
- un mélange de 2,3,3,4,4,4-hexafluorobut-1-ène, de 1,1,1,2-tétrafluoroéthane et de 1,1-difluoroéthane.
- un mélange de 2,3,3,4,4,4-hexafluorobut-1-ène, de 1,1,2,2-tétrafluoroéthane et de 1,3,3,3-tétrafluoropropène ; ou
- un mélange de 2,3,3,4,4,4-hexafluorobut-1-ène, de 1,1,2,2-tétrafluoroéthane et de 1,1,1-trifluoropropane.

Selon un mode de réalisation, la différence entre la pression de saturation liquide et la pression de saturation vapeur à une température de -5°C est inférieure ou égale à 10 % de la pression de saturation liquide.

Selon un mode de réalisation, la composition est non-inflammable.

L'invention concerne également l'utilisation de la composition susmentionnée, en tant que fluide de transfert de chaleur.

L'invention concerne également une composition de transfert de chaleur, comprenant la composition susmentionnée en tant que fluide de transfert de chaleur, ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant une composition telle que décrite ci-dessus en tant que fluide de transfert de chaleur ou contenant une composition de transfert de chaleur telle que décrite ci-dessus.

Selon un mode de réalisation, l'installation est choisie parmi les installations mobiles ou stationnaires de chauffage par pompe à chaleur, de climatisation, de réfrigération, de congélation et les cycles de Rankine, et qui de préférence est une installation de réfrigération pour container.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition telle que décrite ci-dessus.

Selon un mode de réalisation, ce procédé est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition telle que décrite ci-dessus.

La présente invention permet de surmonter les inconvénients de l'état de la technique. Elle fournit plus particulièrement des fluides de transfert de chaleur à bas GWP, susceptibles de remplacer les fluides de transfert de chaleur usuels.

En particulier, dans certains modes de réalisation, l'invention fournit des fluides de transfert de chaleur quasi-azéotropiques. Dans certains modes de réalisation, l'invention fournit des fluides de transfert de chaleur qui présentent de bonnes performances énergétiques (notamment capacité volumétrique et / ou coefficient de performance) par rapport à des fluides de transfert de chaleur usuels et / ou présentent des performances énergétiques améliorées par rapport aux fluides de transfert de chaleur à bas GWP connus.

Ceci est accompli grâce à des mélanges comprenant d'une part du HFO-1336yf, et d'autre part au moins un composé hydrocarbure, hydrofluorocarbure ou fluorooléfine présentant un point d'ébullition inférieur ou égal à 0°C, de préférence inférieur ou égal à -10°C, qui est en particulier choisi parmi la liste de composés mentionnée ci-dessus.

Les mélanges comprenant des composés présentant un faible point d'ébullition ont une capacité volumétrique améliorée par rapport au HFO-1336yf seul. L'augmentation de la capacité volumétrique d'une composition permet l'utilisation de compresseurs à moindre volume balayé, et en conséquence de plus petite taille.

DESCRIPTION DE MODES DE REALISATION DE L'INVENTION

L'invention est maintenant décrite plus en détail et de façon non limitative dans la description qui suit.

Les principaux composés utilisés dans le cadre de l'invention sont notés comme suit :

- 2,3,3,4,4,4-hexafluorobut-1-ène : HFO-1336yf ;
- 1,3,3,3-tétrafluoropropène : HFO-1234ze ;
- 2,3,3,3-tétrafluoropropène : HFO-1234yf ;
- 1,1,3,3-tétrafluoropropène : HFO-1234zc ;
- 3,3,3-trifluoropropène : HFO-1243zf ;
- 2,3,3-trifluoropropène : HFO-1243yf ;
- 1,1,1,2-tétrafluoroéthane : HFC-134a ;
- 1,1,2,2-tétrafluoroéthane : HFC-134 ;
- pentafluoroéthane : HFC-125 ;
- 1,1,1,2,3,3,3-heptafluoropropane : HFC-227ea ;
- 1,1-difluoroéthane : HFC-152a ;
- 1,1,1-trifluoropropane : H FC-263fb ;
- propane : HC-290 ;
- isobutane : HC-600a.

Sauf mention contraire, dans l'ensemble de la demande les proportions de composés indiquées sont données en pourcentages massiques.

Le HFO-1234ze peut être sous forme cis ou trans ou être un mélange de ces deux formes. De préférence il est sous forme trans (E).

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « *composé de transfert de chaleur »,* respectivement « *fluide de transfert de chaleur »* (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « *composition de transfert de chaleur »* on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les nanoparticules, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre de nanoparticules on peut notamment utiliser les nanoparticules de charbon, les oxydes métalliques (cuivre, aluminium), $TiO_2$, $Al_2O_3$, $MoS_2$...

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, spirales, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération (avec des installations mobiles par exemple dans les containers, ou stationnaires) et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur* ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions qui comprennent du HFO-1336yf en combinaison avec au moins un composé hydrocarbure, éther, hydrofluoroéther, hydrofluorocarbure ou fluorooléfine (de préférence un composé hydrofluorocarbure, hydrocarbure ou fluorooléfine) de point d'ébullition inférieur ou égal à -10°C à la pression de 101,325 kPa.

Le point d'ébullition peut être mesuré selon la norme NF EN 378-1 d'avril 2008.

De préférence, le composé est choisi parmi le HFO-1234yf, le HFO-1234ze, le HFO-1234zc, le HFO-1243zf, le HFO-1243yf, le HFC-134a, le HFC-134, le HFC-125, le HFC-227ea, le HFC-152a, le HFC-263fb, le HC-290 et le HC-600a.

Le HFO-1234ze, le HFO-1234yf, le HFC-134a, le HFC-134, le HFC-263fb et le HFC-152a sont préférés parmi ceux-ci.

Les températures normales d'ébullition à 1 bar de ces composés sont les suivantes, à une précision de 0,5°C près :

- HFO-1234ze : -18,5°C ;
- HFO-1234yf : -29,5°C ;
- HFC-134a : -26°C ;
- HFC-134 : -17,5°C ;
- HFC-263fb : -13,0°C ;
- HFC-152a : -24,0°C

En particulier, les compositions ci-dessus peuvent être des mélanges binaires ou ternaires de composés.

Des mélanges binaires sont des mélanges de deux composés de transfert de chaleur. Des mélanges ternaires sont des mélanges de trois composés de transfert de chaleur.

Des impuretés peuvent être présentes ou non dans de tels fluides de transfert de chaleur. Lorsqu'elles sont présentes, elles représentent moins de 1 %, de préférence moins de 0,5 %, de préférence moins de 0,1 %, de préférence moins de 0,05 % et de préférence moins de 0,01 % de la composition.

Dans le cas des mélanges ternaires, le fluide de transfert de chaleur peut comprendre du HFO-1336yf en combinaison avec deux composés choisis parmi le HFO-1234yf, le HFO-1234ze, le HFO-1234zc, le HFO-1243zf, le HFO-1243yf, le HFC-134a, le HFC-134, le HFC-125, le HFC-227ea, le HFC-152a, le HFC-263fb, le HC-290 et le HC-600a ; ou bien du HFO-1336yf en combinaison avec un composé choisi parmi le HFO-1234yf, le HFO-1234ze, le HFO-1234zc, le HFO-1243zf, le HFO-1243yf, le HFC-134a, le HFC-134, le HFC-125, le HFC-227ea, le HFC-152a, le HFC-263fb, le HC-290 et le HC-600a ainsi qu'un composé supplémentaire, de préférence choisi parmi les hydrocarbures, les hydrochlorofluorocarbures, les hydrofluorocarbures, les hydrofluoroéthers, les éthers (d'hydrocarbures), les fluorooléfines, l'ammoniac et le dioxyde de carbone.

Dans les compositions ci-dessus, le HFO-1336yf peut représenter de 0,1 à 1 % de la composition ; ou de 1 à 2 % de la composition ; ou de 2 à 3% de la composition ; ou de 3 à 4 % de la composition ; ou de 4 à 5 % de la composition ; ou de 5 à 6 % de la composition ; ou de 6 à 7 % de la composition ; ou de 7 à 8 % de la composition ; ou de 8 à 9 % de la composition ; ou de 9 à 10 % de la composition ; ou de 10 à 11 % de la composition ; ou de 11 à 12 % de la composition ; ou de 12 à 13 % de la composition ; ou de 13 à 14 % de la composition ; ou de 14 à 15 % de la composition ; ou de 15 à 16 % de la composition ; ou de 16 à 17 % de la composition ; ou de 17 à 18 % de la composition ; ou de 18 à 19 % de la composition ; ou de 19 à 20 % de la composition ; ou de 20 à 21 % de la composition ; ou de 21 à 22 % de la composition ; ou de 22 à 23 % de la composition ; ou de 23 à 24 % de la composition ; ou de 24 à 25 % de la composition ; ou de 25 à 26 % de la composition ; ou de 26 à 27 % de la composition ; ou de 27 à 28 % de la composition ; ou de 28 à 29 % de la composition ; ou de 29 à 30 % de la composition ; ou de 30 à 31 % de la composition ; ou de 31 à 32 % de la composition ; ou de 32 à 33 % de la composition ; ou de 33 à 34 % de la composition ; ou de 34 à 35 % de la composition ; ou de 35 à 36 % de la composition ; ou de 36 à 37 % de la composition ; ou de 37 à 38 % de la composition ; ou de 38 à 39 % de la composition ; ou de 39 à 40 % de la composition ; ou de 40 à 41 % de la composition ; ou de 41 à 42 % de la composition ; ou de 42 à 43 % de la composition ; ou de 43 à 44 % de la composition ; ou de 44 à 45 % de la composition ; ou de 45 à 46 % de la composition ; ou de 46 à 47 % de la composition ; ou de 47 à 48 % de la composition ; ou de 48 à 49 % de la composition ; ou de 49 à 50 % de la composition ; ou de 50 à 51 % de la composition ; ou de 51 à 52 % de la composition ; ou de 52 à 53 % de la composition ; ou de 53 à 54 % de la composition ; ou de 54 à 55 % de la composition ; ou de 55 à 56 % de la composition ; ou de 56 à 57 % de la composition ; ou de 57 à 58 % de la composition ; ou de 58 à 59 % de la composition ; ou de 59 à 60 % de la composition ; ou de 60 à 61 % de la composition ; ou de 61 à 62 % de la composition ; ou de 62 à 63 % de la composition ; ou de 63 à 64 % de la composition ; ou de 64 à 65 % de la composition ; ou de 65 à 66 % de la composition ; ou de 66 à 67 % de la composition ; ou de 67 à 68 % de la composition ; ou de 68 à 69 % de la composition ; ou de 69 à 70 % de la composition ; ou de 70 à 71 % de la composition ; ou de 71 à 72 % de la composition ; ou de 72 à 73 % de la composition ; ou de 73 à 74 % de la composition ; ou de 74 à 75 % de la composition ; ou de 75 à 76 % de la composition ; ou de 76 à 77 % de la composition ; ou de 77 à 78 % de la composition ; ou de 78 à 79 % de la composition ; ou de 79 à 80 % de la composition ; ou de 80 à 81 % de la composition ; ou de 81 à 82 % de la composition ; ou de 82 à 83 % de la composition ;

ou de 83 à 84 % de la composition ; ou de 84 à 85 % de la composition ; ou de 85 à 86 % de la composition ; ou de 86 à 87 % de la composition ; ou de 87 à 88 % de la composition ; ou de 88 à 89 % de la composition ; ou de 89 à 90 % de la composition ; ou de 90 à 91 % de la composition ; ou de 91 à 92 % de la composition ; ou de 92 à 93 % de la composition ; ou de 93 à 94 % de la composition ; ou de 94 à 95 % de la composition ; ou de 95 à 96 % de la composition ; ou de 96 à 97 % de la composition ; ou de 97 à 98 % de la composition ; ou de 98 à 99 % de la composition ; ou de 99 à 99,9 % de la composition. La teneur en HFO-1336yf peut également varier dans plusieurs des intervalles ci-dessus : par exemple de 1 à 2 % et de 2 à 3 %, c'est-à-dire de 1 à 3 %, etc.

De plus, dans les compositions ci-dessus, le ou chaque composé hydrocarbure, éther, hydrofluoroéther, hydrofluorocarbure ou fluorooléfine de point d'ébullition inférieur ou égal à -10°C peut représenter de 0,1 à 1 % de la composition ; ou de 1 à 2 % de la composition ; ou de 2 à 3% de la composition ; ou de 3 à 4 % de la composition ; ou de 4 à 5 % de la composition ; ou de 5 à 6 % de la composition ; ou de 6 à 7 % de la composition ; ou de 7 à 8 % de la composition ; ou de 8 à 9 % de la composition ; ou de 9 à 10 % de la composition ; ou de 10 à 11 % de la composition ; ou de 11 à 12 % de la composition ; ou de 12 à 13 % de la composition ; ou de 13 à 14 % de la composition ; ou de 14 à 15 % de la composition ; ou de 15 à 16 % de la composition ; ou de 16 à 17 % de la composition ; ou de 17 à 18 % de la composition ; ou de 18 à 19 % de la composition ; ou de 19 à 20 % de la composition ; ou de 20 à 21 % de la composition ; ou de 21 à 22 % de la composition ; ou de 22 à 23 % de la composition ; ou de 23 à 24 % de la composition ; ou de 24 à 25 % de la composition ; ou de 25 à 26 % de la composition ; ou de 26 à 27 % de la composition ; ou de 27 à 28 % de la composition ; ou de 28 à 29 % de la composition ; ou de 29 à 30 % de la composition ; ou de 30 à 31 % de la composition ; ou de 31 à 32 % de la composition ; ou de 32 à 33 % de la composition ; ou de 33 à 34 % de la composition ; ou de 34 à 35 % de la composition ; ou de 35 à 36 % de la composition ; ou de 36 à 37 % de la composition ; ou de 37 à 38 % de la composition ; ou de 38 à 39 % de la composition ; ou de 39 à 40 % de la composition ; ou de 40 à 41 % de la composition ; ou de 41 à 42 % de la composition ; ou de 42 à 43 % de la composition ; ou de 43 à 44 % de la composition ; ou de 44 à 45 % de la composition ; ou de 45 à 46 % de la composition ; ou de 46 à 47 % de la composition ; ou de 47 à 48 % de la composition ; ou de 48 à 49 % de la composition ; ou de 49 à 50 % de la composition ; ou de 50 à 51 % de la composition ; ou de 51 à 52 % de la composition ; ou de 52 à 53 % de la composition ; ou de 53 à 54 % de la composition ; ou de 54 à 55 % de la composition ; ou de 55 à 56 % de la composition ; ou de 56 à 57 % de la composition ; ou de 57 à 58 % de la composition ; ou de 58 à 59 % de la composition ; ou de 59 à 60 % de la composition ; ou de 60 à 61 % de la composition ; ou de 61 à 62 % de la composition ; ou de 62 à 63 % de la composition ; ou de 63 à 64 % de la composition ; ou de 64 à 65 % de la composition ; ou de 65 à 66 % de la composition ; ou de 66 à 67 % de la composition ; ou de 67 à 68 % de la composition ; ou de 68 à 69 % de la composition ; ou de 69 à 70 % de la composition ; ou de 70 à 71 % de la composition ; ou de 71 à 72 % de la composition ; ou de 72 à 73 % de la composition ; ou de 73 à 74 % de la composition ; ou de 74 à 75 % de la composition ; ou de 75 à 76 % de la composition ; ou de 76 à 77 % de la composition ; ou de 77 à 78 % de la composition ; ou de 78 à 79 % de la composition ; ou de 79 à 80 % de la composition ; ou de 80 à 81 % de la composition ; ou de 81 à 82 % de la composition ; ou de 82 à 83 % de la composition ; ou de 83 à 84 % de la composition ; ou de 84 à 85 % de la composition ; ou de 85 à 86 % de la composition ; ou de 86 à 87 % de la composition ; ou de 87 à 88 % de la composition ; ou de 88 à 89 % de la composition ; ou de 89 à 90 % de la composition ; ou de 90 à 91 % de la composition ; ou de 91 à 92 % de la composition ; ou de 92 à 93 % de la composition ; ou de 93 à 94 % de la composition ; ou de 94 à 95 % de la composition ; ou de 95 à 96 % de la composition ; ou de 96 à 97 % de la composition ; ou de 97 à 98 % de la composition ; ou de 98 à 99 % de la composition ; ou de 99 à 99,9 % de la composition. La teneur du composé ou de chaque composé peut également varier dans plusieurs des intervalles ci-dessus : par exemple de 1 à 2 % et de 2 à 3 %, c'est-à-dire de 1 à 3 %, etc.

Des compositions préférées sont :

- le mélange binaire de HFO-1336yf et de HFO-1234ze (et notamment de HFO-E-1234ze) ;
- le mélange binaire de HFO-1336yf et de HFC-263fb ;
- le mélange binaire de HFO-1336yf et de HFC-134 ;
- le mélange binaire de HFO-1336yf et de HFC-134a ;
- le mélange binaire de HFO-1336yf et de HFC-152a ;
- le mélange ternaire de HFO-1336yf, de HFC-134a et de HFO-1234ze (notamment HFO-E-1234ze) ;
- le mélange ternaire de HFO-1336yf, de HFC-134a et de HFC-263fb ;
- le mélange ternaire de HFO-1336yf, de HFC-134a et de HFC-152a ;
- le mélange ternaire de HFO-1336yf, de HFC-134 et de HFO-1234ze (notamment HFO-E-1234ze) ; et
- le mélange ternaire de HFO-1336yf, de HFC-134 et de HFC-263fb.

Dans certains modes de réalisation la composition selon l'invention présente l'une des formulations listées dans le tableau ci-dessous :

7

|  | HFO-1336yf | HFO-1234ze |
|---|---|---|
| Composition n°1 | de 1 à 5 % | de 95 à 99 % |
| Composition n°2 | de 5 à 10 % | de 90 à 95 % |
| Composition n°3 | de 10 à 15 % | de 85 à 90 % |
| Composition n°4 | de 15 à 20 % | de 80 à 85 % |
| Composition n°5 | de 20 à 25 % | de 75 à 80 % |
| Composition n°6 | de 25 à 30 % | de 70 à 75 % |
| Composition n°7 | de 30 à 35 % | de 65 à 70 % |
| Composition n°8 | de 35 à 40 % | de 60 à 65 % |
| Composition n°9 | de 40 à 45 % | de 55 à 60 % |
| Composition n°10 | de 45 à 50 % | de 50 à 55 % |
| Composition n°11 | de 50 à 55 % | de 45 à 50 % |
| Composition n°12 | de 55 à 60 % | de 40 à 45 % |
| Composition n°13 | de 60 à 65 % | de 35 à 40 % |
| Composition n°14 | de 65 à 70 % | de 30 à 35 % |
| Composition n°15 | de 70 à 75 % | de 25 à 30 % |
| Composition n°16 | de 75 à 80 % | de 20 à 25 % |
| Composition n°17 | de 80 à 85 % | de 15 à 20 % |
| Composition n°18 | de 85 à 90 % | de 10 à 15 % |
| Composition n°19 | de 90 à 95 % | de 5 à 10 % |
| Composition n°20 | de 95 à 99 % | de 1 à 5 % |

Dans certains modes de réalisation la composition selon l'invention présente l'une des formulations listées dans le tableau ci-dessous :

|  | HFO-1336yf | HFC-263fb |
|---|---|---|
| Composition n°1 | de 1 à 5 % | de 95 à 99 % |
| Composition n°2 | de 5 à 10 % | de 90 à 95 % |
| Composition n°3 | de 10 à 15 % | de 85 à 90 % |
| Composition n°4 | de 15 à 20 % | de 80 à 85 % |
| Composition n°5 | de 20 à 25 % | de 75 à 80 % |
| Composition n°6 | de 25 à 30 % | de 70 à 75 % |
| Composition n°7 | de 30 à 35 % | de 65 à 70 % |
| Composition n°8 | de 35 à 40 % | de 60 à 65 % |
| Composition n°9 | de 40 à 45 % | de 55 à 60 % |
| Composition n°10 | de 45 à 50 % | de 50 à 55 % |
| Composition n°11 | de 50 à 55 % | de 45 à 50 % |
| Composition n°12 | de 55 à 60 % | de 40 à 45 % |
| Composition n°13 | de 60 à 65 % | de 35 à 40 % |
| Composition n°14 | de 65 à 70 % | de 30 à 35 % |

(suite)

|  | HFO-1336yf | HFC-263fb |
|---|---|---|
| Composition n°15 | de 70 à 75 % | de 25 à 30 % |
| Composition n°16 | de 75 à 80 % | de 20 à 25 % |
| Composition n°17 | de 80 à 85 % | de 15 à 20 % |
| Composition n°18 | de 85 à 90 % | de 10 à 15 % |
| Composition n°19 | de 90 à 95 % | de 5 à 10 % |
| Composition n°20 | de 95 à 99 % | de 1 à 5 % |

Dans certains modes de réalisation la composition selon l'invention présente l'une des formulations listées dans le tableau ci-dessous :

|  | HFO-1336yf | HFC-134 |
|---|---|---|
| Composition n°1 | de 1 à 5 % | de 95 à 99 % |
| Composition n°2 | de 5 à 10 % | de 90 à 95 % |
| Composition n°3 | de 10 à 15 % | de 85 à 90 % |
| Composition n°4 | de 15 à 20 % | de 80 à 85 % |
| Composition n°5 | de 20 à 25 % | de 75 à 80 % |
| Composition n°6 | de 25 à 30 % | de 70 à 75 % |
| Composition n°7 | de 30 à 35 % | de 65 à 70 % |
| Composition n°8 | de 35 à 40 % | de 60 à 65 % |
| Composition n°9 | de 40 à 45 % | de 55 à 60 % |
| Composition n°10 | de 45 à 50 % | de 50 à 55 % |
| Composition n°11 | de 50 à 55 % | de 45 à 50 % |
| Composition n°12 | de 55 à 60 % | de 40 à 45 % |
| Composition n°13 | de 60 à 65 % | de 35 à 40 % |
| Composition n°14 | de 65 à 70 % | de 30 à 35 % |
| Composition n°15 | de 70 à 75 % | de 25 à 30 % |
| Composition n°16 | de 75 à 80 % | de 20 à 25 % |
| Composition n°17 | de 80 à 85 % | de 15 à 20 % |
| Composition n°18 | de 85 à 90 % | de 10 à 15 % |
| Composition n°19 | de 90 à 95 % | de 5 à 10 % |
| Composition n°20 | de 95 à 99 % | de 1 à 5 % |

Dans certains modes de réalisation la composition selon l'invention présente l'une des formulations listées dans le tableau ci-dessous :

|  | HFO-1336yf | HFC-134a |
|---|---|---|
| Composition n°1 | de 1 à 5 % | de 95 à 99 % |
| Composition n°2 | de 5 à 10 % | de 90 à 95 % |
| Composition n°3 | de 10 à 15 % | de 85 à 90 % |
| Composition n°4 | de 15 à 20 % | de 80 à 85 % |

(suite)

|  | HFO-1336yf | HFC-134a |
|---|---|---|
| Composition n°5 | de 20 à 25 % | de 75 à 80 % |
| Composition n°6 | de 25 à 30 % | de 70 à 75 % |
| Composition n°7 | de 30 à 35 % | de 65 à 70 % |
| Composition n°8 | de 35 à 40 % | de 60 à 65 % |
| Composition n°9 | de 40 à 45 % | de 55 à 60 % |
| Composition n°10 | de 45 à 50 % | de 50 à 55 % |
| Composition n°11 | de 50 à 55 % | de 45 à 50 % |
| Composition n°12 | de 55 à 60 % | de 40 à 45 % |
| Composition n°13 | de 60 à 65 % | de 35 à 40 % |
| Composition n°14 | de 65 à 70 % | de 30 à 35 % |
| Composition n°15 | de 70 à 75 % | de 25 à 30 % |
| Composition n°16 | de 75 à 80 % | de 20 à 25 % |
| Composition n°17 | de 80 à 85 % | de 15 à 20 % |
| Composition n°18 | de 85 à 90 % | de 10 à 15 % |
| Composition n°19 | de 90 à 95 % | de 5 à 10 % |
| Composition n°20 | de 95 à 99 % | de 1 à 5 % |

Dans certains modes de réalisation la composition selon l'invention présente l'une des formulations listées dans le tableau ci-dessous :

|  | HFO-1336yf | HFC-152a |
|---|---|---|
| Composition n°1 | de 1 à 5 % | de 95 à 99 % |
| Composition n°2 | de 5 à 10 % | de 90 à 95 % |
| Composition n°3 | de 10 à 15 % | de 85 à 90 % |
| Composition n°4 | de 15 à 20 % | de 80 à 85 % |
| Composition n°5 | de 20 à 25 % | de 75 à 80 % |
| Composition n°6 | de 25 à 30 % | de 70 à 75 % |
| Composition n°7 | de 30 à 35 % | de 65 à 70 % |
| Composition n°8 | de 35 à 40 % | de 60 à 65 % |
| Composition n°9 | de 40 à 45 % | de 55 à 60 % |
| Composition n°10 | de 45 à 50 % | de 50 à 55 % |
| Composition n°11 | de 50 à 55 % | de 45 à 50 % |
| Composition n°12 | de 55 à 60 % | de 40 à 45 % |
| Composition n°13 | de 60 à 65 % | de 35 à 40 % |
| Composition n°14 | de 65 à 70 % | de 30 à 35 % |
| Composition n°15 | de 70 à 75 % | de 25 à 30 % |
| Composition n°16 | de 75 à 80 % | de 20 à 25 % |
| Composition n°17 | de 80 à 85 % | de 15 à 20 % |
| Composition n°18 | de 85 à 90 % | de 10 à 15 % |

(suite)

|  | HFO-1336yf | HFC-152a |
|---|---|---|
| Composition n°19 | de 90 à 95 % | de 5 à 10 % |
| Composition n°20 | de 95 à 99 % | de 1 à 5 % |

Dans certains modes de réalisation la composition selon l'invention présente l'une des formulations listées dans le tableau ci-dessous :

|  | HFO-1336yf | HFC-134a | HFO-1234ze |
|---|---|---|---|
| Composition n°1 | de 1 à 10 % | de 1 à 10 % | de 80 à 98 % |
| Composition n°2 | de 1 à 10 % | de 10 à 20 % | de 70 à 89 % |
| Composition n°3 | de 1 à 10 % | de 20 à 30 % | de 60 à 79 % |
| Composition n°4 | de 1 à 10 % | de 30 à 40 % | de 50 à 69 % |
| Composition n°5 | de 1 à 10 % | de 40 à 50 % | de 40 à 59 % |
| Composition n°6 | de 1 à 10 % | de 50 à 60 % | de 30 à 49 % |
| Composition n°7 | de 1 à 10 % | de 60 à 70 % | de 20 à 39 % |
| Composition n°8 | de 1 à 10 % | de 70 à 80 % | de 10 à 29 % |
| Composition n°9 | de 1 à 10 % | de 80 à 90 % | de 1 à 19 % |
| Composition n°10 | de 1 à 10 % | de 90 à 98 % | de 1 à 9 % |
| Composition n°11 | de 10 à 20 % | de 1 à 10 % | de 70 à 89 % |
| Composition n°12 | de 10 à 20 % | de 10 à 20 % | de 60 à 80 % |
| Composition n°13 | de 10 à 20 % | de 20 à 30 % | de 50 à 70 % |
| Composition n°14 | de 10 à 20 % | de 30 à 40 % | de 40 à 60 % |
| Composition n°15 | de 10 à 20 % | de 40 à 50 % | de 30 à 50 % |
| Composition n°16 | de 10 à 20 % | de 50 à 60 % | de 20 à 40 % |
| Composition n°17 | de 10 à 20 % | de 60 à 70 % | de 10 à 30 % |
| Composition n°18 | de 10 à 20 % | de 70 à 80 % | de 1 à 20 % |
| Composition n°19 | de 10 à 20 % | de 80 à 90 % | de 1 à 10 % |
| Composition n°20 | de 20 à 30 % | de 1 à 10 % | de 60 à 79 % |
| Composition n°21 | de 20 à 30 % | de 10 à 20 % | de 50 à 70 % |
| Composition n°22 | de 20 à 30 % | de 20 à 30 % | de 40 à 60 % |
| Composition n°23 | de 20 à 30 % | de 30 à 40 % | de 30 à 50 % |
| Composition n°24 | de 20 à 30 % | de 40 à 50 % | de 20 à 40 % |
| Composition n°25 | de 20 à 30 % | de 50 à 60 % | de 10 à 30 % |
| Composition n°26 | de 20 à 30 % | de 60 à 70 % | de 1 à 20 % |
| Composition n°27 | de 20 à 30 % | de 70 à 80 % | de 1 à 10 % |
| Composition n°28 | de 30 à 40 % | de 1 à 10 % | de 50 à 69 % |
| Composition n°29 | de 30 à 40 % | de 10 à 20 % | de 40 à 60 % |
| Composition n°30 | de 30 à 40 % | de 20 à 30 % | de 30 à 50 % |
| Composition n°31 | de 30 à 40 % | de 30 à 40 % | de 20 à 40 % |
| Composition n°32 | de 30 à 40 % | de 40 à 50 % | de 10 à 30 % |

(suite)

|  | HFO-1336yf | HFC-134a | HFO-1234ze |
|---|---|---|---|
| Composition n°33 | de 30 à 40 % | de 50 à 60 % | de 1 à 20 % |
| Composition n°34 | de 30 à 40 % | de 60 à 70 % | de 1 à 10 % |
| Composition n°35 | de 40 à 50 % | de 1 à 10 % | de 40 à 59 % |
| Composition n°36 | de 40 à 50 % | de 10 à 20 % | de 30 à 50 % |
| Composition n°37 | de 40 à 50 % | de 20 à 30 % | de 20 à 40 % |
| Composition n°38 | de 40 à 50 % | de 30 à 40 % | de 10 à 30 % |
| Composition n°39 | de 40 à 50 % | de 40 à 50 % | de 1 à 20 % |
| Composition n°40 | de 40 à 50 % | de 50 à 60 % | de 1 à 10 % |
| Composition n°41 | de 50 à 60 % | de 1 à 10 % | de 30 à 49 % |
| Composition n°42 | de 50 à 60 % | de 10 à 20 % | de 20 à 40 % |
| Composition n°43 | de 50 à 60 % | de 20 à 30 % | de 10 à 30 % |
| Composition n°44 | de 50 à 60 % | de 30 à 40 % | de 1 à 20 % |
| Composition n°45 | de 50 à 60 % | de 40 à 50 % | de 1 à 10 % |
| Composition n°46 | de 60 à 70 % | de 1 à 10 % | de 20 à 39 % |
| Composition n°47 | de 60 à 70 % | de 10 à 20 % | de 10 à 30 % |
| Composition n°48 | de 60 à 70 % | de 20 à 30 % | de 1 à 20 % |
| Composition n°49 | de 60 à 70 % | de 30 à 40 % | de 1 à 10 % |
| Composition n°50 | de 70 à 80 % | de 1 à 10 % | de 10 à 29 % |
| Composition n°51 | de 70 à 80 % | de 10 à 20 % | de 1 à 20 % |
| Composition n°52 | de 70 à 80 % | de 20 à 30 % | de 1 à 10 % |
| Composition n°53 | de 80 à 90 % | de 1 à 10 % | de 1 à 19 % |
| Composition n°54 | de 80 à 90 % | de 10 à 20 % | de 1 à 10 % |
| Composition n°55 | de 90 à 98 % | de 1 à 9 % | de 1 à 9 % |

Dans certains modes de réalisation la composition selon l'invention présente l'une des formulations listées dans le tableau ci-dessous :

|  | HFO-1336yf | HFC-134a | HFC-263fb |
|---|---|---|---|
| Composition n°1 | de 1 à 10 % | de 1 à 10 % | de 80 à 98 % |
| Composition n°2 | de 1 à 10 % | de 10 à 20 % | de 70 à 89 % |
| Composition n°3 | de 1 à 10 % | de 20 à 30 % | de 60 à 79 % |
| Composition n°4 | de 1 à 10 % | de 30 à 40 % | de 50 à 69 % |
| Composition n°5 | de 1 à 10 % | de 40 à 50 % | de 40 à 59 % |
| Composition n°6 | de 1 à 10 % | de 50 à 60 % | de 30 à 49 % |
| Composition n°7 | de 1 à 10 % | de 60 à 70 % | de 20 à 39 % |
| Composition n°8 | de 1 à 10 % | de 70 à 80 % | de 10 à 29 % |
| Composition n°9 | de 1 à 10 % | de 80 à 90 % | de 1 à 19 % |
| Composition n°10 | de 1 à 10 % | de 90 à 98 % | de 1 à 9 % |
| Composition n°11 | de 10 à 20 % | de 1 à 10 % | de 70 à 89 % |

(suite)

| | HFO-1336yf | HFC-134a | HFC-263fb |
|---|---|---|---|
| Composition n°12 | de 10 à 20 % | de 10 à 20 % | de 60 à 80 % |
| Composition n°13 | de 10 à 20 % | de 20 à 30 % | de 50 à 70 % |
| Composition n°14 | de 10 à 20 % | de 30 à 40 % | de 40 à 60 % |
| Composition n°15 | de 10 à 20 % | de 40 à 50 % | de 30 à 50 % |
| Composition n°16 | de 10 à 20 % | de 50 à 60 % | de 20 à 40 % |
| Composition n°17 | de 10 à 20 % | de 60 à 70 % | de 10 à 30 % |
| Composition n°18 | de 10 à 20 % | de 70 à 80 % | de 1 à 20 % |
| Composition n°19 | de 10 à 20 % | de 80 à 90 % | de 1 à 10 % |
| Composition n°20 | de 20 à 30 % | de 1 à 10 % | de 60 à 79 % |
| Composition n°21 | de 20 à 30 % | de 10 à 20 % | de 50 à 70 % |
| Composition n°22 | de 20 à 30 % | de 20 à 30 % | de 40 à 60 % |
| Composition n°23 | de 20 à 30 % | de 30 à 40 % | de 30 à 50 % |
| Composition n°24 | de 20 à 30 % | de 40 à 50 % | de 20 à 40 % |
| Composition n°25 | de 20 à 30 % | de 50 à 60 % | de 10 à 30 % |
| Composition n°26 | de 20 à 30 % | de 60 à 70 % | de 1 à 20 % |
| Composition n°27 | de 20 à 30 % | de 70 à 80 % | de 1 à 10 % |
| Composition n°28 | de 30 à 40 % | de 1 à 10 % | de 50 à 69 % |
| Composition n°29 | de 30 à 40 % | de 10 à 20 % | de 40 à 60 % |
| Composition n°30 | de 30 à 40 % | de 20 à 30 % | de 30 à 50 % |
| Composition n°31 | de 30 à 40 % | de 30 à 40 % | de 20 à 40 % |
| Composition n°32 | de 30 à 40 % | de 40 à 50 % | de 10 à 30 % |
| Composition n°33 | de 30 à 40 % | de 50 à 60 % | de 1 à 20 % |
| Composition n°34 | de 30 à 40 % | de 60 à 70 % | de 1 à 10 % |
| Composition n°35 | de 40 à 50 % | de 1 à 10 % | de 40 à 59 % |
| Composition n°36 | de 40 à 50 % | de 10 à 20 % | de 30 à 50 % |
| Composition n°37 | de 40 à 50 % | de 20 à 30 % | de 20 à 40 % |
| Composition n°38 | de 40 à 50 % | de 30 à 40 % | de 10 à 30 % |
| Composition n°39 | de 40 à 50 % | de 40 à 50 % | de 1 à 20 % |
| Composition n°40 | de 40 à 50 % | de 50 à 60 % | de 1 à 10 % |
| Composition n°41 | de 50 à 60 % | de 1 à 10 % | de 30 à 49 % |
| Composition n°42 | de 50 à 60 % | de 10 à 20 % | de 20 à 40 % |
| Composition n°43 | de 50 à 60 % | de 20 à 30 % | de 10 à 30 % |
| Composition n°44 | de 50 à 60 % | de 30 à 40 % | de 1 à 20 % |
| Composition n°45 | de 50 à 60 % | de 40 à 50 % | de 1 à 10 % |
| Composition n°46 | de 60 à 70 % | de 1 à 10 % | de 20 à 39 % |
| Composition n°47 | de 60 à 70 % | de 10 à 20 % | de 10 à 30 % |
| Composition n°48 | de 60 à 70 % | de 20 à 30 % | de 1 à 20 % |
| Composition n°49 | de 60 à 70 % | de 30 à 40 % | de 1 à 10 % |

(suite)

|  | HFO-1336yf | HFC-134a | HFC-263fb |
|---|---|---|---|
| Composition n°50 | de 70 à 80 % | de 1 à 10 % | de 10 à 29 % |
| Composition n°51 | de 70 à 80 % | de 10 à 20 % | de 1 à 20 % |
| Composition n°52 | de 70 à 80 % | de 20 à 30 % | de 1 à 10 % |
| Composition n°53 | de 80 à 90 % | de 1 à 10 % | de 1 à 19 % |
| Composition n°54 | de 80 à 90 % | de 10 à 20 % | de 1 à 10 % |
| Composition n°55 | de 90 à 98 % | de 1 à 9 % | de 1 à 9 % |

Dans certains modes de réalisation la composition selon l'invention présente l'une des formulations listées dans le tableau ci-dessous :

|  | HFO-1336yf | HFC-134a | HFC-152a |
|---|---|---|---|
| Composition n°1 | de 1 à 10 % | de 1 à 10 % | de 80 à 98 % |
| Composition n°2 | de 1 à 10 % | de 10 à 20 % | de 70 à 89 % |
| Composition n°3 | de 1 à 10 % | de 20 à 30 % | de 60 à 79 % |
| Composition n°4 | de 1 à 10 % | de 30 à 40 % | de 50 à 69 % |
| Composition n°5 | de 1 à 10 % | de 40 à 50 % | de 40 à 59 % |
| Composition n°6 | de 1 à 10 % | de 50 à 60 % | de 30 à 49 % |
| Composition n°7 | de 1 à 10 % | de 60 à 70 % | de 20 à 39 % |
| Composition n°8 | de 1 à 10 % | de 70 à 80 % | de 10 à 29 % |
| Composition n°9 | de 1 à 10 % | de 80 à 90 % | de 1 à 19 % |
| Composition n°10 | de 1 à 10 % | de 90 à 98 % | de 1 à 9 % |
| Composition n°11 | de 10 à 20 % | de 1 à 10 % | de 70 à 89 % |
| Composition n°12 | de 10 à 20 % | de 10 à 20 % | de 60 à 80 % |
| Composition n°13 | de 10 à 20 % | de 20 à 30 % | de 50 à 70 % |
| Composition n°14 | de 10 à 20 % | de 30 à 40 % | de 40 à 60 % |
| Composition n°15 | de 10 à 20 % | de 40 à 50 % | de 30 à 50 % |
| Composition n°16 | de 10 à 20 % | de 50 à 60 % | de 20 à 40 % |
| Composition n°17 | de 10 à 20 % | de 60 à 70 % | de 10 à 30 % |
| Composition n°18 | de 10 à 20 % | de 70 à 80 % | de 1 à 20 % |
| Composition n°19 | de 10 à 20 % | de 80 à 90 % | de 1 à 10 % |
| Composition n°20 | de 20 à 30 % | de 1 à 10 % | de 60 à 79 % |
| Composition n°21 | de 20 à 30 % | de 10 à 20 % | de 50 à 70 % |
| Composition n°22 | de 20 à 30 % | de 20 à 30 % | de 40 à 60 % |
| Composition n°23 | de 20 à 30 % | de 30 à 40 % | de 30 à 50 % |
| Composition n°24 | de 20 à 30 % | de 40 à 50 % | de 20 à 40 % |
| Composition n°25 | de 20 à 30 % | de 50 à 60 % | de 10 à 30 % |
| Composition n°26 | de 20 à 30 % | de 60 à 70 % | de 1 à 20 % |
| Composition n°27 | de 20 à 30 % | de 70 à 80 % | de 1 à 10 % |
| Composition n°28 | de 30 à 40 % | de 1 à 10 % | de 50 à 69 % |

(suite)

|  | HFO-1336yf | HFC-134a | HFC-152a |
|---|---|---|---|
| Composition n°29 | de 30 à 40 % | de 10 à 20 % | de 40 à 60 % |
| Composition n°30 | de 30 à 40 % | de 20 à 30 % | de 30 à 50 % |
| Composition n°31 | de 30 à 40 % | de 30 à 40 % | de 20 à 40 % |
| Composition n°32 | de 30 à 40 % | de 40 à 50 % | de 10 à 30 % |
| Composition n°33 | de 30 à 40 % | de 50 à 60 % | de 1 à 20 % |
| Composition n°34 | de 30 à 40 % | de 60 à 70 % | de 1 à 10 % |
| Composition n°35 | de 40 à 50 % | de 1 à 10 % | de 40 à 59 % |
| Composition n°36 | de 40 à 50 % | de 10 à 20 % | de 30 à 50 % |
| Composition n°37 | de 40 à 50 % | de 20 à 30 % | de 20 à 40 % |
| Composition n°38 | de 40 à 50 % | de 30 à 40 % | de 10 à 30 % |
| Composition n°39 | de 40 à 50 % | de 40 à 50 % | de 1 à 20 % |
| Composition n°40 | de 40 à 50 % | de 50 à 60 % | de 1 à 10 % |
| Composition n°41 | de 50 à 60 % | de 1 à 10 % | de 30 à 49 % |
| Composition n°42 | de 50 à 60 % | de 10 à 20 % | de 20 à 40 % |
| Composition n°43 | de 50 à 60 % | de 20 à 30 % | de 10 à 30 % |
| Composition n°44 | de 50 à 60 % | de 30 à 40 % | de 1 à 20 % |
| Composition n°45 | de 50 à 60 % | de 40 à 50 % | de 1 à 10 % |
| Composition n°46 | de 60 à 70 % | de 1 à 10 % | de 20 à 39 % |
| Composition n°47 | de 60 à 70 % | de 10 à 20 % | de 10 à 30 % |
| Composition n°48 | de 60 à 70 % | de 20 à 30 % | de 1 à 20 % |
| Composition n°49 | de 60 à 70 % | de 30 à 40 % | de 1 à 10 % |
| Composition n°50 | de 70 à 80 % | de 1 à 10 % | de 10 à 29 % |
| Composition n°51 | de 70 à 80 % | de 10 à 20 % | de 1 à 20 % |
| Composition n°52 | de 70 à 80 % | de 20 à 30 % | de 1 à 10 % |
| Composition n°53 | de 80 à 90 % | de 1 à 10 % | de 1 à 19 % |
| Composition n°54 | de 80 à 90 % | de 10 à 20 % | de 1 à 10 % |
| Composition n°55 | de 90 à 98 % | de 1 à 9 % | de 1 à 9 % |

Dans certains modes de réalisation la composition selon l'invention présente l'une des formulations listées dans le tableau ci-dessous :

|  | HFO-1336yf | HFC-134 | HFO-1234ze |
|---|---|---|---|
| Composition n°1 | de 1 à 10 % | de 1 à 10 % | de 80 à 98 % |
| Composition n°2 | de 1 à 10 % | de 10 à 20 % | de 70 à 89 % |
| Composition n°3 | de 1 à 10 % | de 20 à 30 % | de 60 à 79 % |
| Composition n°4 | de 1 à 10 % | de 30 à 40 % | de 50 à 69 % |
| Composition n°5 | de 1 à 10 % | de 40 à 50 % | de 40 à 59 % |
| Composition n°6 | de 1 à 10 % | de 50 à 60 % | de 30 à 49 % |
| Composition n°7 | de 1 à 10 % | de 60 à 70 % | de 20 à 39 % |

(suite)

| | HFO-1336yf | HFC-134 | HFO-1234ze |
|---|---|---|---|
| Composition n°8 | de 1 à 10 % | de 70 à 80 % | de 10 à 29 % |
| Composition n°9 | de 1 à 10 % | de 80 à 90 % | de 1 à 19 % |
| Composition n°10 | de 1 à 10 % | de 90 à 98 % | de 1 à 9 % |
| Composition n°11 | de 10 à 20 % | de 1 à 10 % | de 70 à 89 % |
| Composition n°12 | de 10 à 20 % | de 10 à 20 % | de 60 à 80 % |
| Composition n°13 | de 10 à 20 % | de 20 à 30 % | de 50 à 70 % |
| Composition n°14 | de 10 à 20 % | de 30 à 40 % | de 40 à 60 % |
| Composition n°15 | de 10 à 20 % | de 40 à 50 % | de 30 à 50 % |
| Composition n°16 | de 10 à 20 % | de 50 à 60 % | de 20 à 40 % |
| Composition n°17 | de 10 à 20 % | de 60 à 70 % | de 10 à 30 % |
| Composition n°18 | de 10 à 20 % | de 70 à 80 % | de 1 à 20 % |
| Composition n°19 | de 10 à 20 % | de 80 à 90 % | de 1 à 10 % |
| Composition n°20 | de 20 à 30 % | de 1 à 10 % | de 60 à 79 % |
| Composition n°21 | de 20 à 30 % | de 10 à 20 % | de 50 à 70 % |
| Composition n°22 | de 20 à 30 % | de 20 à 30 % | de 40 à 60 % |
| Composition n°23 | de 20 à 30 % | de 30 à 40 % | de 30 à 50 % |
| Composition n°24 | de 20 à 30 % | de 40 à 50 % | de 20 à 40 % |
| Composition n°25 | de 20 à 30 % | de 50 à 60 % | de 10 à 30 % |
| Composition n°26 | de 20 à 30 % | de 60 à 70 % | de 1 à 20 % |
| Composition n°27 | de 20 à 30 % | de 70 à 80 % | de 1 à 10 % |
| Composition n°28 | de 30 à 40 % | de 1 à 10 % | de 50 à 69 % |
| Composition n°29 | de 30 à 40 % | de 10 à 20 % | de 40 à 60 % |
| Composition n°30 | de 30 à 40 % | de 20 à 30 % | de 30 à 50 % |
| Composition n°31 | de 30 à 40 % | de 30 à 40 % | de 20 à 40 % |
| Composition n°32 | de 30 à 40 % | de 40 à 50 % | de 10 à 30 % |
| Composition n°33 | de 30 à 40 % | de 50 à 60 % | de 1 à 20 % |
| Composition n°34 | de 30 à 40 % | de 60 à 70 % | de 1 à 10 % |
| Composition n°35 | de 40 à 50 % | de 1 à 10 % | de 40 à 59 % |
| Composition n°36 | de 40 à 50 % | de 10 à 20 % | de 30 à 50 % |
| Composition n°37 | de 40 à 50 % | de 20 à 30 % | de 20 à 40 % |
| Composition n°38 | de 40 à 50 % | de 30 à 40 % | de 10 à 30 % |
| Composition n°39 | de 40 à 50 % | de 40 à 50 % | de 1 à 20 % |
| Composition n°40 | de 40 à 50 % | de 50 à 60 % | de 1 à 10 % |
| Composition n°41 | de 50 à 60 % | de 1 à 10 % | de 30 à 49 % |
| Composition n°42 | de 50 à 60 % | de 10 à 20 % | de 20 à 40 % |
| Composition n°43 | de 50 à 60 % | de 20 à 30 % | de 10 à 30 % |
| Composition n°44 | de 50 à 60 % | de 30 à 40 % | de 1 à 20 % |
| Composition n°45 | de 50 à 60 % | de 40 à 50 % | de 1 à 10 % |

(suite)

|  | HFO-1336yf | HFC-134 | HFO-1234ze |
|---|---|---|---|
| Composition n°46 | de 60 à 70 % | de 1 à 10 % | de 20 à 39 % |
| Composition n°47 | de 60 à 70 % | de 10 à 20 % | de 10 à 30 % |
| Composition n°48 | de 60 à 70 % | de 20 à 30 % | de 1 à 20 % |
| Composition n°49 | de 60 à 70 % | de 30 à 40 % | de 1 à 10 % |
| Composition n°50 | de 70 à 80 % | de 1 à 10 % | de 10 à 29 % |
| Composition n°51 | de 70 à 80 % | de 10 à 20 % | de 1 à 20 % |
| Composition n°52 | de 70 à 80 % | de 20 à 30 % | de 1 à 10 % |
| Composition n°53 | de 80 à 90 % | de 1 à 10 % | de 1 à 19 % |
| Composition n°54 | de 80 à 90 % | de 10 à 20 % | de 1 à 10 % |
| Composition n°55 | de 90 à 98 % | de 1 à 9 % | de 1 à 9 % |

Dans certains modes de réalisation la composition selon l'invention présente l'une des formulations listées dans le tableau ci-dessous :

|  | HFO-1336yf | HFC-134 | HFC-263fb |
|---|---|---|---|
| Composition n°1 | de 1 à 10 % | de 1 à 10 % | de 80 à 98 % |
| Composition n°2 | de 1 à 10 % | de 10 à 20 % | de 70 à 89 % |
| Composition n°3 | de 1 à 10 % | de 20 à 30 % | de 60 à 79 % |
| Composition n°4 | de 1 à 10 % | de 30 à 40 % | de 50 à 69 % |
| Composition n°5 | de 1 à 10 % | de 40 à 50 % | de 40 à 59 % |
| Composition n°6 | de 1 à 10 % | de 50 à 60 % | de 30 à 49 % |
| Composition n°7 | de 1 à 10 % | de 60 à 70 % | de 20 à 39 % |
| Composition n°8 | de 1 à 10 % | de 70 à 80 % | de 10 à 29 % |
| Composition n°9 | de 1 à 10 % | de 80 à 90 % | de 1 à 19 % |
| Composition n°10 | de 1 à 10 % | de 90 à 98 % | de 1 à 9 % |
| Composition n°11 | de 10 à 20 % | de 1 à 10 % | de 70 à 89 % |
| Composition n°12 | de 10 à 20 % | de 10 à 20 % | de 60 à 80 % |
| Composition n°13 | de 10 à 20 % | de 20 à 30 % | de 50 à 70 % |
| Composition n°14 | de 10 à 20 % | de 30 à 40 % | de 40 à 60 % |
| Composition n°15 | de 10 à 20 % | de 40 à 50 % | de 30 à 50 % |
| Composition n°16 | de 10 à 20 % | de 50 à 60 % | de 20 à 40 % |
| Composition n°17 | de 10 à 20 % | de 60 à 70 % | de 10 à 30 % |
| Composition n°18 | de 10 à 20 % | de 70 à 80 % | de 1 à 20 % |
| Composition n°19 | de 10 à 20 % | de 80 à 90 % | de 1 à 10 % |
| Composition n°20 | de 20 à 30 % | de 1 à 10 % | de 60 à 79 % |
| Composition n°21 | de 20 à 30 % | de 10 à 20 % | de 50 à 70 % |
| Composition n°22 | de 20 à 30 % | de 20 à 30 % | de 40 à 60 % |
| Composition n°23 | de 20 à 30 % | de 30 à 40 % | de 30 à 50 % |
| Composition n°24 | de 20 à 30 % | de 40 à 50 % | de 20 à 40 % |

(suite)

|  | | HFO-1336yf | HFC-134 | HFC-263fb |
|---|---|---|---|---|
| | Composition n°25 | de 20 à 30 % | de 50 à 60 % | de 10 à 30 % |
| | Composition n°26 | de 20 à 30 % | de 60 à 70 % | de 1 à 20 % |
| | Composition n°27 | de 20 à 30 % | de 70 à 80 % | de 1 à 10 % |
| | Composition n°28 | de 30 à 40 % | de 1 à 10 % | de 50 à 69 % |
| | Composition n°29 | de 30 à 40 % | de 10 à 20 % | de 40 à 60 % |
| | Composition n°30 | de 30 à 40 % | de 20 à 30 % | de 30 à 50 % |
| | Composition n°31 | de 30 à 40 % | de 30 à 40 % | de 20 à 40 % |
| | Composition n°32 | de 30 à 40 % | de 40 à 50 % | de 10 à 30 % |
| | Composition n°33 | de 30 à 40 % | de 50 à 60 % | de 1 à 20 % |
| | Composition n°34 | de 30 à 40 % | de 60 à 70 % | de 1 à 10 % |
| | Composition n°35 | de 40 à 50 % | de 1 à 10 % | de 40 à 59 % |
| | Composition n°36 | de 40 à 50 % | de 10 à 20 % | de 30 à 50 % |
| | Composition n°37 | de 40 à 50 % | de 20 à 30 % | de 20 à 40 % |
| | Composition n°38 | de 40 à 50 % | de 30 à 40 % | de 10 à 30 % |
| | Composition n°39 | de 40 à 50 % | de 40 à 50 % | de 1 à 20 % |
| | Composition n°40 | de 40 à 50 % | de 50 à 60 % | de 1 à 10 % |
| | Composition n°41 | de 50 à 60 % | de 1 à 10 % | de 30 à 49 % |
| | Composition n°42 | de 50 à 60 % | de 10 à 20 % | de 20 à 40 % |
| | Composition n°43 | de 50 à 60 % | de 20 à 30 % | de 10 à 30 % |
| | Composition n°44 | de 50 à 60 % | de 30 à 40 % | de 1 à 20 % |
| | Composition n°45 | de 50 à 60 % | de 40 à 50 % | de 1 à 10 % |
| | Composition n°46 | de 60 à 70 % | de 1 à 10 % | de 20 à 39 % |
| | Composition n°47 | de 60 à 70 % | de 10 à 20 % | de 10 à 30 % |
| | Composition n°48 | de 60 à 70 % | de 20 à 30 % | de 1 à 20 % |
| | Composition n°49 | de 60 à 70 % | de 30 à 40 % | de 1 à 10 % |
| | Composition n°50 | de 70 à 80 % | de 1 à 10 % | de 10 à 29 % |
| | Composition n°51 | de 70 à 80 % | de 10 à 20 % | de 1 à 20 % |
| | Composition n°52 | de 70 à 80 % | de 20 à 30 % | de 1 à 10 % |
| | Composition n°53 | de 80 à 90 % | de 1 à 10 % | de 1 à 19 % |
| | Composition n°54 | de 80 à 90 % | de 10 à 20 % | de 1 à 10 % |
| | Composition n°55 | de 90 à 98 % | de 1 à 9 % | de 1 à 9 % |

Parmi les compositions ci-dessus, certaines présentent l'avantage d'être quasi-azéotropiques.

On désigne par « *quasi-azéotropiques* » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide). Ces fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

Certaines des compositions de l'invention sont quasi-azéotropiques à une température de référence de -5°C.

Certaines des compositions de l'invention sont non-inflammables, au sens de la norme ASHRAE 34-2007, et de préférence avec une température de test de 60°C au lieu de 100°C.

Certaines des compositions de l'invention présentent des performances équivalentes et / ou améliorées par rapport à un fluide de transfert de chaleur de référence, par exemple le HFO-1234ze ou le HC-600a.

Ces performances peuvent notamment être la capacité volumétrique et / ou le coefficient de performance.

Les performances équivalentes ou améliorées peuvent notamment être vérifiées pour les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C).

Les performances équivalentes ou améliorées peuvent alternativement être vérifiées pour les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C).

Dans les procédés de « *refroidissement ou de chauffage à température modérée* » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 90°C, notamment de 30°C à 70°C, de manière plus particulièrement préférée de 35°C à 55°C et par exemple d'environ 50°C. Ces procédés peuvent être des procédés de réfrigération, de climatisation ou de chauffage.

Les performances équivalentes ou améliorées peuvent alternativement être vérifiées pour les procédés de réfrigération à basse température, c'est-à-dire ceux dans lesquels la température du fluide ou du corps refroidi est de -40°C à -10°C, et de préférence de -35°C à -25°C, de manière plus particulièrement préférée de -30°C à -20°C (idéalement d'environ -25°C).

Dans les procédés de « *réfrigération à basse température* » mentionnés ci-dessus, la température d'entrée du fluide de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 40°C.

Certaines compositions de l'invention sont également particulièrement avantageuses pour les procédés de chauffage à haute température, c'est-à-dire ceux dans lesquels la température du fluide ou du corps chauffé est supérieure à 90°C, par exemple supérieure ou égale à 110°C ou supérieure ou égale à 130°C, et de préférence inférieure ou égale à 170°C.

Certaines compositions de l'invention sont également particulièrement avantageuses pour les applications de transport réfrigéré et notamment de containers réfrigérés.

Les compositions selon l'invention peuvent servir à remplacer divers fluides de transfert de chaleur dans diverses applications de transfert de chaleur. Par exemple, les compositions selon l'invention peuvent servir à remplacer :

- le 1,1,1,2-tétrafluoroéthane (R134a) ;
- le 1,1-difluoroéthane (R152a) ;
- le 1,1,1,3,3-pentafluoropropane (R245fa) ;
- les mélanges de pentafluoroéthane (R125), de 1,1,1,2-tétrafluoroéthane (R134a) et d'isobutane (R600a), à savoir les R422 ;
- le chlorodifluorométhane (R22) ;
- le mélange de 51,2 % de chloropentafluoroéthane (R115) et de 48,8 % de chlorodifluorométhane (R22), à savoir le R502 ;
- tout hydrocarbure ;
- le mélange de 20 % de difluorométhane (R32), de 40 % de pentafluoroéthane (R125) et de 40 % de 1,1,1,2-tétrafluoroéthane (R134a), à savoir le R407A ;
- le mélange de 23 % de difluorométhane (R32), de 25 % de pentafluoroéthane (R125) et de 52 % de 1,1,1,2-tétrafluoroéthane (R134a), à savoir le R407C ;
- le mélange de 30 % de difluorométhane (R32), de 30 % de pentafluoroéthane (R125) et de 40 % de 1,1,1,2-tétrafluoroéthane (R134a), à savoir le R407F ;
- le mélange de 44 % de pentafluoroéthane (R125), de 52% de 1,1,1-trifluoroéthane (R143a) et de 4 % de 1,1,1,2-tétrafluoroéthane (R134a), à savoir le R404A ;
- le R1234yf (2,3,3,3-tétrafluoropropène) ;
- le R1234ze (1,3,3,3-tétrafluoropropène).

Les compositions selon l'invention peuvent également être utiles en tant qu'agent d'expansion, agent de propulsion (par exemple pour un aérosol), agent de nettoyage ou solvant, outre leur utilisation en tant que fluides de transfert de chaleur.

En tant qu'agent de propulsion, les compositions selon l'invention peuvent être utilisées seules ou en combinaison avec des agents de propulsion connus. L'agent de propulsion comprend, de préférence consiste en, une composition selon l'invention. La substance active devant être projetée peut être mélangée avec l'agent de propulsion et des composés inertes, des solvants ou autres additifs, pour former une composition à projeter. De préférence, la composition à projeter est un aérosol.

En tant qu'agent d'expansion, les compositions selon l'invention peuvent être comprises dans une composition d'expansion, qui comprend de préférence un ou plusieurs autres composés susceptibles de réagir et de former une mousse ou structure cellulaire dans des conditions appropriées, comme cela est connu de l'homme du métier.

En particulier, l'invention propose un procédé de préparation d'un produit thermoplastique expansé comprenant d'abord la préparation d'une composition polymérique d'expansion. Typiquement, la composition polymérique d'expansion est préparée en plastifiant une résine polymère et en mélangeant les composés d'une composition d'agent d'expansion à une pression initiale. La plastification de la résine polymère peut être effectuée sous l'effet de la chaleur, en chauffant la résine polymère pour la ramollir suffisamment pour mélanger une composition d'agent d'expansion. Généralement, la température de plastification est proche de la température de transition vitreuse ou de la température de fusion pour les polymères cristallins.

D'autres utilisations des compositions selon l'invention comprennent les utilisations en tant que solvants, agents de nettoyage ou autres. On peut citer par exemple le dégraissage par la vapeur, le nettoyage de précision, le nettoyage de circuits électroniques, le nettoyage à sec, le nettoyage abrasif, les solvants pour le dépôt de lubrifiants et d'agents de libération, et d'autres traitements de solvant ou de surface.

Exemple 1 - méthode de calcul des propriétés des fluides de transfert de chaleur dans les différentes configurations envisagées

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données disponibles pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur les HFC sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression des HFO sont mesurées par la méthode statique. La température critique et la pression critique sont mesurées par un calorimètre C80 commercialisé par Setaram.

L'équation RK-Soave utilise des coefficients d'interaction binaire pour représenter le comportement des produits en mélanges. Les coefficients sont calculés en fonction des données expérimentales d'équilibre liquide vapeur.

La technique utilisé pour les mesures d'équilibre liquide vapeur est la méthode de cellule statique analytique. La cellule d'équilibre comprend un tube saphir et est équipée de deux échantillonneurs ROLSI™ électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

Les mesures d'équilibre liquide vapeur sur le binaire HFC-134 / HFO-1234ze sont réalisées pour l'isotherme suivante : 20°C.

Les mesures d'équilibre liquide vapeur sur le binaire HFC-134 / HFC-263fb sont réalisées pour l'isotherme suivante : 30°C.

Les mesures d'équilibre liquide vapeur sur le binaire HFC-134 / HFO-1336yf sont réalisées pour l'isotherme suivante : 50°C.

Les mesures d'équilibre liquide vapeur sur le binaire HFC-134a / HFO-1234ze sont réalisées pour l'isotherme suivante : 20°C.

Les mesures d'équilibre liquide vapeur sur le binaire HFC-134a / HFC-263fb sont réalisées pour l'isotherme suivante : 30°C.

Les mesures d'équilibre liquide vapeur sur le binaire HFC-134a / HFO-1336yf sont réalisées pour l'isotherme suivante : 50°C.

Les mesures d'équilibre liquide vapeur sur le binaire HFC-134a / HFO-1234yf sont réalisées pour l'isotherme suivante : 20°C.

Les mesures d'équilibre liquide vapeur sur le binaire HFO-1234ze / HFC-263fb sont réalisées pour l'isotherme suivante : 30°C.

Les mesures d'équilibre liquide vapeur sur le binaire HFO-1234ze / HFO-1336yf sont réalisées pour l'isotherme suivante : 50°C.

Les mesures d'équilibre liquide vapeur sur le binaire HFO-1234ze / HFO-1234yf sont réalisées pour l'isotherme suivante : 18°C.

Les mesures d'équilibre liquide vapeur sur le binaire HFO-1234yf / HFO-1336yf sont réalisées pour l'isotherme suivante : 50°C.

Les mesures d'équilibre liquide vapeur sur le binaire HFO-1336yf / HFC-263fb sont réalisées pour l'isotherme suivante : 50°C.

Pour l'évaluation des performances énergétiques, on considère un système à compression équipé d'un évaporateur et condenseur à contre-courant, d'un compresseur à vis et d'un détendeur.

Le système fonctionne avec 5°C de surchauffe. La température d'évaporation est de -5°C et la température de condensation est de 50°C.

Le coefficient de performance (COP) est défini comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit (les températures T sont en K) :

$$T_{moyenne}^{condenseur} = T_{entrée}^{condenseur} - T_{sortie}^{condenseur}$$

$$T_{moyenne}^{évaporateur} = T_{sortie}^{évaporateur} - T_{entrée}^{évaporateur}$$

Le COP de Lorenz dans le cas de l'air conditionné et de la réfrigération est :

$$COPlorenz = \frac{T_{moyenne}^{évaporateur}}{T_{moyenne}^{condenseur} - T_{moyenne}^{évaporateur}}$$

Le COP de Lorenz dans le cas du chauffage est :

$$COPlorenz = \frac{T_{moyenne}^{condenseur}}{T_{moyenne}^{condenseur} - T_{moyenne}^{évaporateur}}$$

Pour chaque composition, le coefficient de performance du cycle de Lorenz est calculé en fonction des températures correspondantes.

Dans les tableaux qui suivent, « *Temp (°C)*» désigne la température, « *P sat liquid* » désigne la pression saturante de liquide, « *P sat vapeur* » désigne la pression saturante de vapeur, « *Diff. Pression (%)* » désigne le rapport de la différence entre la pression saturante de liquide et la pression saturante de vapeur, sur la pression saturante de liquide (en %), « *Temp sortie évap* » désigne la température du fluide à la sortie de l'évaporateur, « *Temp sortie comp* » désigne la température du fluide à la sortie du compresseur, « *T sortie cond* » désigne la température du fluide à la sortie du condenseur, « *Temp entrée détend* » désigne la température du fluide à l'entrée du détendeur, « *evap P (bar)* » désigne la pression du fluide dans l'évaporateur, « *cond P (bar)* » désigne la pression du fluide dans le condenseur, « *Taux (p/p)* » désigne le taux de compression, « *Glide* » désigne le glissement de température, « *% CAP* » désigne la capacité volumétrique du fluide par rapport au fluide de référence indiqué en première ligne, « *%COP/COPLorenz* » désigne le rapport du COP du système par rapport au COP du cycle de Lorenz correspondant.

Exemple 2 - Données pour les mélanges quasi-azéotropiques

Mélange HFO-1336yf / HFO-E-1234ze:

| HFO-1234ze | HFO-1336yf | Temp, (°C) | P sat liq (bar) | P sat vap (bar) | % diff pression |
|---|---|---|---|---|---|
| 65 | 35 | -4 | 1,5 | 1,3 | 10,8 |
| 70 | 30 | -4 | 1,5 | 1,4 | 9,4 |
| 75 | 25 | -4 | 1,6 | 1,4 | 8,0 |
| 80 | 20 | -4 | 1,6 | 1,5 | 6,4 |
| 85 | 15 | -5 | 1,6 | 1,6 | 4,8 |
| 90 | 10 | -5 | 1,7 | 1,6 | 3,2 |
| 95 | 5 | -5 | 1,7 | 1,7 | 1,5 |

Mélange HFO-1336yf / HFC-134:

| HFC-134 | HFO-1336yf | Temp, (°C) | P sat liq (bar) | P sat vap (bar) | % diff pression |
|---|---|---|---|---|---|
| 60 | 40 | -4 | 1,6 | 1,4 | 10,8 |
| 65 | 35 | -4 | 1,6 | 1,5 | 8,7 |
| 70 | 30 | -4 | 1,7 | 1,6 | 6,7 |
| 75 | 25 | -5 | 1,7 | 1,6 | 5,0 |
| 80 | 20 | -5 | 1,8 | 1,7 | 3,5 |
| 85 | 15 | -5 | 1,8 | 1,8 | 2,3 |
| 90 | 10 | -5 | 1,8 | 1,8 | 1,3 |
| 95 | 5 | -5 | 1,9 | 1,8 | 0,6 |

Mélange HFO-1336yf / HFC-134a:

| HFC-134a | HFO-1336yf | Temp, (°C) | P sat liq (bar) | P sat vap (bar) | % diff pression |
|---|---|---|---|---|---|
| 80 | 20 | -4 | 2,1 | 1,9 | 9,9 |
| 85 | 15 | -4 | 2,2 | 2,1 | 7,4 |
| 90 | 10 | -4 | 2,3 | 2,2 | 5,0 |
| 95 | 5 | -5 | 2,4 | 2,3 | 2,5 |

Mélange HFO-1336yf / HFC-263fb:

| HFO-1336yf | HFC-263fb | Temp, (°C) | P sat liq (bar) | P sat vap (bar) | % diff pression |
|---|---|---|---|---|---|
| 95 | 5 | -5 | 0,8 | 0,8 | 4,4 |
| 90 | 10 | -5 | 0,9 | 0,8 | 7,1 |
| 85 | 15 | -5 | 1,0 | 0,9 | 8,7 |
| 80 | 20 | -4 | 1,0 | 0,9 | 9,7 |
| 75 | 25 | -4 | 1,1 | 0,9 | 10,1 |
| 70 | 30 | -4 | 1,1 | 1,0 | 10,1 |
| 65 | 35 | -4 | 1,1 | 1,0 | 9,9 |
| 60 | 40 | -4 | 1,2 | 1,1 | 9,4 |
| 55 | 45 | -4 | 1,2 | 1,1 | 8,8 |
| 50 | 50 | -4 | 1,2 | 1,1 | 8,0 |
| 45 | 55 | -4 | 1,3 | 1,2 | 7,1 |
| 40 | 60 | -4 | 1,3 | 1,2 | 6,2 |
| 35 | 65 | -5 | 1,3 | 1,2 | 5,3 |
| 30 | 70 | -5 | 1,3 | 1,3 | 4,3 |
| 25 | 75 | -5 | 1,4 | 1,3 | 3,4 |
| 20 | 80 | -5 | 1,4 | 1,3 | 2,6 |
| 15 | 85 | -5 | 1,4 | 1,4 | 1,8 |
| 10 | 90 | -5 | 1,4 | 1,4 | 1,1 |
| 5 | 95 | -5 | 1,4 | 1,4 | 0,5 |

Mélange HFO-1336yf / HFO- 1234yf:

| HFO-1234yf | HFO-1336yf | Temp, (°C) | P sat liq (bar) | P sat vap (bar) | % diff pression |
|---|---|---|---|---|---|
| 90 | 10 | -4 | 2,4 | 2,2 | 8,7 |
| 95 | 5 | -4 | 2,5 | 2,4 | 4,5 |

## Mélange HFO-1336yf / HFO-E-1234ze / HFC-134:

| HFO-1234ze | HFC-134 | HFO-1336yf | Temp, (°C) | P sat liq (bar) | P sat vap (bar) | % diff pression |
|---|---|---|---|---|---|---|
| 5 | 60 | 35 | -4 | 1,6 | 1,5 | 9,3 |
| 5 | 65 | 30 | -4 | 1,7 | 1,6 | 7,2 |
| 5 | 70 | 25 | -4 | 1,7 | 1,6 | 5,4 |
| 5 | 75 | 20 | -5 | 1,8 | 1,7 | 3,7 |
| 5 | 80 | 15 | -5 | 1,8 | 1,8 | 2,4 |
| 5 | 85 | 10 | -5 | 1,8 | 1,8 | 1,3 |
| 5 | 90 | 5 | -5 | 1,9 | 1,8 | 0,6 |
| | | | | | | |
| 15 | 50 | 35 | -4 | 1,6 | 1,5 | 10,5 |
| 15 | 55 | 30 | -4 | 1,7 | 1,5 | 8,3 |
| 15 | 60 | 25 | -4 | 1,7 | 1,6 | 6,2 |

| HFO-1234ze | HFC-134 | HFO-1336yf | Temp, (°C) | P sat liq (bar) | P sat vap (bar) | % diff pression |
|---|---|---|---|---|---|---|
| 15 | 65 | 20 | -5 | 1,8 | 1,7 | 4,3 |
| 15 | 70 | 15 | -5 | 1,8 | 1,7 | 2,7 |
| 15 | 75 | 10 | -5 | 1,8 | 1,8 | 1,5 |
| 15 | 80 | 5 | -5 | 1,9 | 1,8 | 0,6 |
| | | | | | | |
| 25 | 45 | 30 | -4 | 1,7 | 1,5 | 9,3 |
| 25 | 50 | 25 | -4 | 1,7 | 1,6 | 7,1 |
| 25 | 55 | 20 | -5 | 1,8 | 1,7 | 5,0 |
| 25 | 60 | 15 | -5 | 1,8 | 1,7 | 3,2 |
| 25 | 65 | 10 | -5 | 1,8 | 1,8 | 1,7 |
| 25 | 70 | 5 | -5 | 1,9 | 1,8 | 0,7 |
| | | | | | | |
| 35 | 35 | 30 | -4 | 1,6 | 1,5 | 10,0 |
| 35 | 40 | 25 | -4 | 1,7 | 1,6 | 7,9 |
| 35 | 45 | 20 | -4 | 1,7 | 1,6 | 5,8 |
| 35 | 50 | 15 | -5 | 1,8 | 1,7 | 3,8 |
| 35 | 55 | 10 | -5 | 1,8 | 1,8 | 2,1 |
| 35 | 60 | 5 | -5 | 1,8 | 1,8 | 0,9 |
| | | | | | | |
| 45 | 25 | 30 | -4 | 1,6 | 1,4 | 10,2 |
| 45 | 30 | 25 | -4 | 1,7 | 1,5 | 8,4 |
| 45 | 35 | 20 | -4 | 1,7 | 1,6 | 6,4 |
| 45 | 40 | 15 | -5 | 1,8 | 1,7 | 4,5 |
| 45 | 45 | 10 | -5 | 1,8 | 1,8 | 2,6 |

(suite)

| HFO-1234ze | HFC-134 | HFO-1336yf | Temp, (°C) | P sat liq (bar) | P sat vap (bar) | % diff pression |
|---|---|---|---|---|---|---|
| 45 | 50 | 5 | -5 | 1,8 | 1,8 | 1,1 |
|  |  |  |  |  |  |  |
| 55 | 15 | 30 | -4 | 1,6 | 1,4 | 10,0 |
| 55 | 20 | 25 | -4 | 1,6 | 1,5 | 8,5 |
| 55 | 25 | 20 | -4 | 1,7 | 1,6 | 6,8 |
| 55 | 30 | 15 | -5 | 1,7 | 1,6 | 4,9 |
| 55 | 35 | 10 | -5 | 1,8 | 1,7 | 3,1 |
| 55 | 40 | 5 | -5 | 1,8 | 1,8 | 1,4 |
|  |  |  |  |  |  |  |
| 65 | 5 | 30 | -4 | 1,5 | 1,4 | 9,6 |
| 65 | 10 | 25 | -4 | 1,6 | 1,5 | 8,2 |
| 65 | 15 | 20 | -4 | 1,6 | 1,5 | 6,7 |
| 65 | 20 | 15 | -5 | 1,7 | 1,6 | 5,1 |
| 65 | 25 | 10 | -5 | 1,8 | 1,7 | 3,3 |
| 65 | 30 | 5 | -5 | 1,8 | 1,8 | 1,7 |
|  |  |  |  |  |  |  |
| 75 | 5 | 20 | -4 | 1,6 | 1,5 | 6,5 |
| 75 | 10 | 15 | -5 | 1,7 | 1,6 | 5,0 |
| 75 | 15 | 10 | -5 | 1,7 | 1,7 | 3,4 |
| 75 | 20 | 5 | -5 | 1,8 | 1,8 | 1,7 |
|  |  |  |  |  |  |  |
| 85 | 5 | 10 | -5 | 1,7 | 1,6 | 3,2 |
| 85 | 10 | 5 | -5 | 1,8 | 1,7 | 1,7 |
|  |  |  |  |  |  |  |
| 90 | 5 | 5 | -5 | 1,7 | 1,7 | 1,6 |

## Mélange HFO-1336yf / HFO-E-1234ze / HFC-134a:

| HFC-134a | HFO-1234ze | HFO-1336yf | Temp, (°C) | P sat liq (bar) | P sat vap (bar) | % diff pression |
|---|---|---|---|---|---|---|
| 75 | 5 | 20 | -4 | 2,1 | 1,9 | 9,9 |
| 80 | 5 | 15 | -4 | 2,2 | 2,0 | 7,4 |
| 85 | 5 | 10 | -4 | 2,3 | 2,2 | 5,0 |
| 90 | 5 | 5 | -5 | 2,3 | 2,3 | 2,6 |
| | | | | | | |
| 65 | 15 | 20 | -4 | 2,1 | 1,9 | 10,2 |
| 75 | 15 | 10 | -4 | 2,2 | 2,1 | 5,2 |
| 80 | 15 | 5 | -5 | 2,3 | 2,2 | 2,9 |
| | | | | | | |
| 55 | 25 | 20 | -4 | 2,0 | 1,8 | 10,7 |
| 65 | 25 | 10 | -4 | 2,2 | 2,1 | 5,7 |
| 70 | 25 | 5 | -5 | 2,3 | 2,2 | 3,4 |
| | | | | | | |
| 55 | 35 | 10 | -4 | 2,1 | 2,0 | 6,3 |
| 60 | 35 | 5 | -5 | 2,2 | 2,1 | 4,0 |
| | | | | | | |
| 45 | 45 | 10 | -4 | 2,1 | 1,9 | 6,8 |
| 50 | 45 | 5 | -5 | 2,1 | 2,0 | 4,5 |
| | | | | | | |
| 25 | 55 | 20 | -4 | 1,8 | 1,6 | 10,7 |
| 35 | 55 | 10 | -4 | 2,0 | 1,8 | 7,0 |
| 40 | 55 | 5 | -5 | 2,1 | 2,0 | 4,8 |
| | | | | | | |
| 5 | 65 | 30 | -4 | 1,6 | 1,4 | 10,9 |
| 15 | 65 | 20 | -4 | 1,7 | 1,6 | 9,6 |
| 25 | 65 | 10 | -4 | 1,9 | 1,8 | 6,7 |
| 30 | 65 | 5 | -5 | 2,0 | 1,9 | 4,8 |
| | | | | | | |
| 5 | 75 | 20 | -4 | 1,7 | 1,5 | 7,7 |
| 10 | 75 | 15 | -4 | 1,7 | 1,6 | 7,0 |
| 15 | 75 | 10 | -4 | 1,8 | 1,7 | 5,9 |
| 20 | 75 | 5 | -5 | 1,9 | 1,8 | 4,4 |
| | | | | | | |
| 5 | 85 | 10 | -5 | 1,7 | 1,7 | 4,3 |
| 10 | 85 | 5 | -5 | 1,8 | 1,8 | 3,4 |
| | | | | | | |
| 5 | 90 | 5 | -5 | 1,8 | 1,7 | 2,6 |

## Mélange HFO-1336yf / HFO-E-1234ze / HFC-263fb:

| HFO-1234ze | HFO-1336yf | HFC-263fb | Temp, (°C) | P sat liq (bar) | P sat vap (bar) | % diff pression |
|---|---|---|---|---|---|---|
| 5 | 90 | 5 | -5 | 0,9 | 0,8 | 8,2 |
| 5 | 60 | 35 | -4 | 1,2 | 1,1 | 10,4 |
| 5 | 50 | 45 | -4 | 1,2 | 1,1 | 8,9 |
| 5 | 40 | 55 | -4 | 1,3 | 1,2 | 7,0 |
| 5 | 30 | 65 | -5 | 1,4 | 1,3 | 5,0 |
| 5 | 20 | 75 | -5 | 1,4 | 1,4 | 3,1 |
| 5 | 10 | 85 | -5 | 1,5 | 1,4 | 1,4 |
| | | | | | | |
| 15 | 40 | 45 | -4 | 1,3 | 1,2 | 8,4 |
| 15 | 30 | 55 | -4 | 1,4 | 1,3 | 6,1 |
| 15 | 20 | 65 | -5 | 1,4 | 1,4 | 3,9 |
| 15 | 10 | 75 | -5 | 1,5 | 1,5 | 2,1 |
| 15 | 5 | 80 | -5 | 1,5 | 1,5 | 1,3 |
| | | | | | | |
| 25 | 40 | 35 | -4 | 1,4 | 1,2 | 9,6 |
| 25 | 30 | 45 | -4 | 1,4 | 1,3 | 7,1 |
| 25 | 20 | 55 | -5 | 1,5 | 1,4 | 4,6 |
| 25 | 10 | 65 | -5 | 1,5 | 1,5 | 2,5 |
| 25 | 5 | 70 | -5 | 1,5 | 1,5 | 1,6 |
| | | | | | | |
| 35 | 30 | 35 | -4 | 1,4 | 1,3 | 7,9 |
| 35 | 20 | 45 | -5 | 1,5 | 1,4 | 5,2 |
| 35 | 10 | 55 | -5 | 1,5 | 1,5 | 2,8 |
| 35 | 5 | 60 | -5 | 1,6 | 1,5 | 1,8 |
| | | | | | | |
| 45 | 30 | 25 | -4 | 1,5 | 1,3 | 8,5 |
| 45 | 20 | 35 | -5 | 1,5 | 1,4 | 5,6 |
| 45 | 10 | 45 | -5 | 1,6 | 1,5 | 3,0 |
| 45 | 5 | 50 | -5 | 1,6 | 1,6 | 1,9 |
| | | | | | | |
| 55 | 30 | 15 | -4 | 1,5 | 1,4 | 9,0 |
| 55 | 20 | 25 | -4 | 1,6 | 1,5 | 5,9 |
| 55 | 10 | 35 | -5 | 1,6 | 1,6 | 3,0 |
| 55 | 5 | 40 | -5 | 1,6 | 1,6 | 1,8 |
| | | | | | | |
| 65 | 30 | 5 | -4 | 1,5 | 1,4 | 9,3 |
| 65 | 20 | 15 | -4 | 1,6 | 1,5 | 6,2 |
| 65 | 10 | 25 | -5 | 1,6 | 1,6 | 3,1 |
| 65 | 5 | 30 | -5 | 1,7 | 1,6 | 1,7 |
| | | | | | | |
| 75 | 20 | 5 | -4 | 1,6 | 1,5 | 6,4 |
| 75 | 10 | 15 | -5 | 1,7 | 1,6 | 3,1 |
| 75 | 5 | 20 | -5 | 1,7 | 1,7 | 1,6 |
| | | | | | | |
| 85 | 10 | 5 | -5 | 1,7 | 1,6 | 3,1 |
| 85 | 5 | 10 | -5 | 1,7 | 1,7 | 1,6 |
| | | | | | | |
| 90 | 5 | 5 | -5 | 1,7 | 1,7 | 1,5 |

## Mélange HFO-1336yf / HFO-E-1234ze / HFO-1234yf:

| HFO-1234yf | HFO-1234ze | HFO-1336yf | Temp, (°C) | P sat liq (bar) | P sat vap (bar) | % diff pression |
|---|---|---|---|---|---|---|
| 85 | 5 | 10 | -4 | 2,4 | 2,2 | 8,7 |
| | | | | | | |
| 75 | 15 | 10 | -4 | 2,3 | 2,1 | 9,0 |
| 80 | 15 | 5 | -4 | 2,4 | 2,3 | 5,1 |
| | | | | | | |
| 65 | 25 | 10 | -4 | 2,3 | 2,1 | 9,3 |
| 70 | 25 | 5 | -4 | 2,4 | 2,2 | 5,7 |
| | | | | | | |
| 45 | 45 | 10 | -4 | 2,1 | 1,9 | 9,6 |
| 50 | 45 | 5 | -4 | 2,2 | 2,1 | 6,8 |
| | | | | | | |
| 35 | 55 | 10 | -4 | 2,0 | 1,8 | 9,3 |
| 40 | 55 | 5 | -4 | 2,1 | 2,0 | 6,9 |
| | | | | | | |
| 15 | 65 | 20 | -4 | 1,8 | 1,6 | 11,0 |
| 25 | 65 | 10 | -4 | 1,9 | 1,8 | 8,5 |
| 30 | 65 | 5 | -4 | 2,0 | 1,9 | 6,6 |
| | | | | | | |
| 5 | 75 | 20 | -4 | 1,7 | 1,5 | 8,2 |
| 15 | 75 | 10 | -4 | 1,8 | 1,7 | 7,0 |
| 20 | 75 | 5 | -5 | 1,9 | 1,8 | 5,7 |
| | | | | | | |
| 5 | 85 | 10 | -5 | 1,7 | 1,7 | 4,7 |
| 10 | 85 | 5 | -5 | 1,8 | 1,8 | 4,1 |
| | | | | | | |
| 5 | 90 | 5 | -5 | 1,8 | 1,7 | 3,0 |

## Mélange HFO-1336yf / HFO-1234yf / HFC-134a:

| HFO-1234yf | HFC-134a | HFO-1336yf | Temp, (°C) | P sat liq (bar) | P sat vap (bar) | % diff pression |
|---|---|---|---|---|---|---|
| 85 | 5 | 10 | -4 | 2,4 | 2,2 | 9,1 |
| 90 | 5 | 5 | -4 | 2,5 | 2,4 | 4,9 |
| | | | | | | |
| 75 | 15 | 10 | -4 | 2,5 | 2,2 | 9,4 |
| 80 | 15 | 5 | -4 | 2,6 | 2,4 | 5,1 |
| | | | | | | |
| 65 | 25 | 10 | -4 | 2,5 | 2,3 | 9,3 |
| 70 | 25 | 5 | -4 | 2,6 | 2,5 | 5,0 |
| | | | | | | |
| 55 | 35 | 10 | -4 | 2,5 | 2,3 | 8,9 |
| 60 | 35 | 5 | -4 | 2,6 | 2,5 | 4,8 |
| | | | | | | |
| 45 | 45 | 10 | -4 | 2,5 | 2,3 | 8,4 |
| 50 | 45 | 5 | -4 | 2,6 | 2,5 | 4,6 |
| | | | | | | |
| 35 | 55 | 10 | -4 | 2,5 | 2,3 | 8,0 |
| 40 | 55 | 5 | -5 | 2,6 | 2,5 | 4,4 |
| | | | | | | |
| 25 | 65 | 10 | -4 | 2,4 | 2,3 | 7,4 |
| 30 | 65 | 5 | -5 | 2,5 | 2,4 | 4,3 |
| | | | | | | |
| 5 | 75 | 20 | -4 | 2,2 | 1,9 | 10,9 |
| 15 | 75 | 10 | -4 | 2,4 | 2,2 | 6,7 |
| 20 | 75 | 5 | -5 | 2,5 | 2,4 | 4,0 |
| | | | | | | |
| 5 | 85 | 10 | -4 | 2,3 | 2,2 | 5,7 |
| 10 | 85 | 5 | -5 | 2,4 | 2,3 | 3,5 |
| | | | | | | |
| 5 | 90 | 5 | -5 | 2,4 | 2,3 | 3,1 |

## Mélange HFO-1336yf / HFC-134 / HFC-263fb:

| HFC-134 | HFO-1336yf | HFC-263fb | Temp, (°C) | P sat liq (bar) | P sat vap (bar) | % diff pression |
|---|---|---|---|---|---|---|
| 5 | 50 | 45 | -4 | 1,3 | 1,1 | 9,8 |
| 5 | 40 | 55 | -4 | 1,3 | 1,2 | 7,7 |
| 5 | 30 | 65 | -5 | 1,4 | 1,3 | 5,6 |
| 5 | 20 | 75 | -5 | 1,4 | 1,4 | 3,7 |
| 5 | 10 | 85 | -5 | 1,5 | 1,4 | 2,0 |
| | | | | | | |
| 15 | 40 | 45 | -4 | 1,4 | 1,2 | 10,4 |
| 15 | 30 | 55 | -4 | 1,4 | 1,3 | 7,8 |
| 15 | 20 | 65 | -5 | 1,5 | 1,4 | 5,5 |
| 15 | 10 | 75 | -5 | 1,5 | 1,5 | 3,5 |
| 15 | 5 | 80 | -5 | 1,5 | 1,5 | 2,7 |
| | | | | | | |
| 25 | 30 | 45 | -4 | 1,5 | 1,4 | 9,2 |
| 25 | 20 | 55 | -4 | 1,6 | 1,5 | 6,5 |
| 25 | 10 | 65 | -5 | 1,6 | 1,5 | 4,3 |
| 25 | 5 | 70 | -5 | 1,6 | 1,6 | 3,4 |
| | | | | | | |
| 35 | 30 | 35 | -4 | 1,6 | 1,4 | 9,7 |
| 35 | 20 | 45 | -4 | 1,6 | 1,5 | 6,8 |
| 35 | 10 | 55 | -5 | 1,7 | 1,6 | 4,4 |
| 35 | 5 | 60 | -5 | 1,7 | 1,6 | 3,4 |
| | | | | | | |
| 45 | 30 | 25 | -4 | 1,6 | 1,5 | 9,4 |
| 45 | 20 | 35 | -4 | 1,7 | 1,6 | 6,5 |
| 45 | 10 | 45 | -5 | 1,7 | 1,6 | 4,0 |
| 45 | 5 | 50 | -5 | 1,7 | 1,7 | 3,0 |
| | | | | | | |
| 55 | 30 | 15 | -4 | 1,7 | 1,5 | 8,5 |
| 55 | 20 | 25 | -4 | 1,7 | 1,6 | 5,6 |
| 55 | 10 | 35 | -5 | 1,8 | 1,7 | 3,3 |
| 55 | 5 | 40 | -5 | 1,8 | 1,7 | 2,3 |
| | | | | | | |
| 65 | 30 | 5 | -4 | 1,7 | 1,6 | 7,3 |
| 65 | 20 | 15 | -5 | 1,7 | 1,7 | 4,6 |
| 65 | 10 | 25 | -5 | 1,8 | 1,7 | 2,4 |
| 65 | 5 | 30 | -5 | 1,8 | 1,8 | 1,5 |
| | | | | | | |
| 75 | 20 | 5 | -5 | 1,8 | 1,7 | 3,8 |
| 75 | 10 | 15 | -5 | 1,8 | 1,8 | 1,7 |
| 75 | 5 | 20 | -5 | 1,8 | 1,8 | 1,0 |
| | | | | | | |
| 85 | 10 | 5 | -5 | 1,8 | 1,8 | 1,4 |
| 85 | 5 | 10 | -5 | 1,8 | 1,8 | 0,7 |
| | | | | | | |
| 90 | 5 | 5 | -5 | 1,9 | 1,8 | 0,6 |

## Mélange HFO-1336yf / HFC-134a / HFC-263fb:

| HFC-134a | HFO-1336yf | HFC-263fb | Temp, (°C) | P sat liq (bar) | P sat vap (bar) | % diff pression |
|---|---|---|---|---|---|---|
| 5 | 40 | 55 | -4 | 1,3 | 1,2 | 8,8 |
| 5 | 30 | 65 | -4 | 1,4 | 1,3 | 6,6 |
| 5 | 20 | 75 | -5 | 1,4 | 1,4 | 4,6 |
| 5 | 10 | 85 | -5 | 1,5 | 1,4 | 2,9 |
| | | | | | | |
| 15 | 20 | 65 | -4 | 1,5 | 1,4 | 7,9 |
| 15 | 10 | 75 | -5 | 1,6 | 1,5 | 5,7 |
| 15 | 5 | 80 | -5 | 1,6 | 1,5 | 4,8 |
| | | | | | | |
| 25 | 20 | 55 | -4 | 1,6 | 1,5 | 10,3 |
| 25 | 10 | 65 | -4 | 1,7 | 1,6 | 7,7 |
| 25 | 5 | 70 | -4 | 1,7 | 1,6 | 6,6 |
| | | | | | | |
| 35 | 10 | 55 | -4 | 1,8 | 1,6 | 8,8 |
| 35 | 5 | 60 | -4 | 1,8 | 1,7 | 7,5 |
| | | | | | | |
| 45 | 10 | 45 | -4 | 1,9 | 1,7 | 9,0 |
| 45 | 5 | 50 | -4 | 1,9 | 1,8 | 7,7 |
| | | | | | | |
| 55 | 10 | 35 | -4 | 2,0 | 1,8 | 8,6 |
| 55 | 5 | 40 | -4 | 2,0 | 1,9 | 7,2 |
| | | | | | | |
| 65 | 10 | 25 | -4 | 2,1 | 1,9 | 7,6 |
| 65 | 5 | 30 | -4 | 2,1 | 2,0 | 6,2 |
| | | | | | | |
| 75 | 20 | 5 | -4 | 2,1 | 1,9 | 10,2 |
| 75 | 10 | 15 | -4 | 2,2 | 2,0 | 6,3 |
| 75 | 5 | 20 | -5 | 2,2 | 2,1 | 4,9 |
| | | | | | | |
| 85 | 10 | 5 | -4 | 2,3 | 2,1 | 5,3 |
| 85 | 5 | 10 | -5 | 2,3 | 2,2 | 3,5 |
| | | | | | | |
| 90 | 5 | 5 | -5 | 2,3 | 2,3 | 2,9 |

Exemple 3 - Résultats pour une réfrigération à température modérée, comparaison avec le HFO-1234ze

| | | | Temp sortie évap (°C) | Temp sortie comp (°C) | T sortie cond (°C) | Temp entrée détend (°C) | evap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| HFC-134a | HFC-134 | HFO-1336yf | | | | | | | | | | | |
| 0 | 75 | 25 | -5 | 63 | 49 | 44 | 2 | 9,9 | 5,8 | 1,0 | 75,5 | 100 | 59 |
| 0 | 80 | 20 | -5 | 64 | 50 | 45 | 2 | 10,1 | 5,8 | 0,7 | 75,6 | 103 | 60 |
| 0 | 85 | 15 | -5 | 65 | 50 | 45 | 2 | 10,2 | 5,7 | 0,4 | 75,6 | 105 | 60 |
| 0 | 90 | 10 | -5 | 66 | 50 | 45 | 2 | 10,4 | 5,7 | 0,3 | 75,7 | 108 | 61 |
| 0 | 95 | 5 | -5 | 66 | 50 | 45 | 2 | 10,5 | 5,7 | 0,1 | 75,7 | 110 | 62 |
| | | | | | | | | | | | | | |
| 65 | 0 | 35 | -3 | 65 | 48 | 43 | 2 | 10,4 | 5,6 | 4 | 75,9 | 104 | 58 |
| 70 | 0 | 30 | -3 | 65 | 48 | 43 | 2 | 10,7 | 5,6 | 3 | 76,0 | 109 | 59 |
| 75 | 0 | 25 | -4 | 66 | 48 | 43 | 2 | 11,1 | 5,5 | 3 | 76,1 | 114 | 60 |
| 80 | 0 | 20 | -4 | 67 | 49 | 44 | 2 | 11,5 | 5,5 | 2 | 76,2 | 119 | 60 |
| 85 | 0 | 15 | -4 | 68 | 49 | 44 | 2 | 11,9 | 5,5 | 2 | 76,3 | 123 | 61 |
| 90 | 0 | 10 | -4 | 69 | 49 | 44 | 2 | 12,3 | 5,4 | 1 | 76,4 | 128 | 62 |
| 95 | 0 | 5 | -5 | 70 | 50 | 45 | 2 | 12,7 | 5,4 | 1 | 76,4 | 133 | 63 |

| HFO-1234ze | HFC-134 | HFO-1336yf | Temp sortie évap (°C) | Temp sortie comp (°C) | T sortie cond (°C) | Temp entrée détend (°C) | evap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| 5 | 70 | 25 | -4 | 63,18 | 49 | 44 | 2 | 9,9 | 6 | 1,0 | 75,5 | 98 | 58 |
| 5 | 75 | 20 | -5 | 63,83 | 50 | 45 | 2 | 10,1 | 6 | 0,7 | 75,6 | 102 | 59 |
| 5 | 80 | 15 | -5 | 64,55 | 50 | 45 | 2 | 10,2 | 6 | 0,5 | 75,6 | 104 | 60 |
| 5 | 85 | 10 | -5 | 65,34 | 50 | 45 | 2 | 10,4 | 6 | 0,3 | 75,7 | 108 | 61 |
| 5 | 90 | 5 | -5 | 66,13 | 50 | 45 | 2 | 10,5 | 6 | 0,1 | 75,7 | 110 | 62 |
| | | | | | | | | | | | | | |
| 15 | 70 | 15 | -5 | 64,09 | 50 | 45 | 2 | 10,2 | 6 | 0,5 | 75,6 | 102 | 59 |
| 15 | 75 | 10 | -5 | 64,85 | 50 | 45 | 2 | 10,4 | 6 | 0,3 | 75,8 | 106 | 60 |
| 15 | 80 | 5 | -5 | 65,64 | 50 | 45 | 2 | 10,5 | 6 | 0,1 | 75,7 | 109 | 61 |
| | | | | | | | | | | | | | |
| 25 | 60 | 15 | -5 | 63,64 | 50 | 45 | 2 | 10,2 | 6 | 0,6 | 75,7 | 101 | 58 |
| 25 | 65 | 10 | -5 | 64,42 | 50 | 45 | 2 | 10,4 | 6 | 0,3 | 75,7 | 105 | 59 |
| 25 | 70 | 5 | -5 | 65,18 | 50 | 45 | 2 | 10,5 | 6 | 0,1 | 75,7 | 108 | 60 |
| | | | | | | | | | | | | | |
| 35 | 55 | 10 | -5 | 64,04 | 50 | 45 | 2 | 10,3 | 6 | 0,4 | 75,7 | 103 | 58 |
| 35 | 60 | 5 | -5 | 64,74 | 50 | 45 | 2 | 10,5 | 6 | 0,2 | 75,7 | 107 | 60 |
| | | | | | | | | | | | | | |
| 45 | 45 | 10 | -5 | 63,68 | 50 | 45 | 2 | 10,2 | 6 | 0,5 | 75,7 | 101 | 58 |
| 45 | 50 | 5 | -5 | 64,23 | 50 | 45 | 2 | 10,4 | 6 | 0,2 | 75,8 | 106 | 59 |
| | | | | | | | | | | | | | |
| 55 | 35 | 10 | -5 | 63,24 | 50 | 45 | 2 | 10,1 | 6 | 0,6 | 75,7 | 100 | 57 |
| 55 | 40 | 5 | -5 | 63,81 | 50 | 45 | 2 | 10,4 | 6 | 0,3 | 75,8 | 104 | 59 |
| | | | | | | | | | | | | | |
| 65 | 30 | 5 | -5 | 63,37 | 50 | 45 | 2 | 10,2 | 6 | 0,3 | 75,8 | 103 | 58 |
| | | | | | | | | | | | | | |
| 75 | 20 | 5 | -5 | 62,86 | 50 | 45 | 2 | 10,1 | 6 | 0,3 | 75,7 | 101 | 58 |
| | | | | | | | | | | | | | |
| 85 | 10 | 5 | -5 | 62,3 | 50 | 45 | 2 | 9,9 | 6 | 0,3 | 75,8 | 99 | 58 |

| | | | Temp sortie évap (°C) | Temp sortie comp (°C) | T sortie cond (°C) | Temp entrée détend (°C) | evap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| HFC-134a | HFO-1234ze | HFO-1336yf | | | | | | | | | | | |
| 60 | 5 | 35 | -3 | 64,24 | 48 | 43 | 2 | 10,3 | 6 | 3,6 | 75,8 | 102 | 57 |
| 65 | 5 | 30 | -3 | 65,03 | 48 | 43 | 2 | 10,7 | 6 | 3,1 | 76,0 | 107 | 58 |
| 70 | 5 | 25 | -4 | 65,81 | 48 | 43 | 2 | 11,1 | 6 | 2,6 | 76,1 | 111 | 59 |
| 75 | 5 | 20 | -4 | 66,61 | 49 | 44 | 2 | 11,4 | 5 | 2,1 | 76,2 | 116 | 59 |
| 80 | 5 | 15 | -4 | 67,46 | 49 | 44 | 2 | 11,8 | 5 | 1,5 | 76,3 | 119 | 59 |
| 85 | 5 | 10 | -4 | 68,28 | 49 | 44 | 2 | 12,2 | 5 | 1,0 | 76,3 | 125 | 61 |
| 90 | 5 | 5 | -5 | 69,36 | 50 | 45 | 2 | 12,6 | 5 | 0,5 | 76,4 | 131 | 62 |
| | | | | | | | | | | | | | |
| 55 | 15 | 30 | -3 | 64,35 | 48 | 43 | 2 | 10,5 | 6 | 3,0 | 75,9 | 102 | 56 |
| 65 | 15 | 20 | -4 | 65,92 | 49 | 44 | 2 | 11,3 | 6 | 2,0 | 76,1 | 111 | 57 |
| 75 | 15 | 10 | -4 | 67,56 | 49 | 44 | 2 | 12,1 | 5 | 1,0 | 76,3 | 119 | 59 |
| 80 | 15 | 5 | -5 | 68,6 | 50 | 45 | 2 | 12,5 | 5 | 0,6 | 76,3 | 128 | 61 |
| | | | | | | | | | | | | | |
| 55 | 25 | 20 | -4 | 65,33 | 49 | 44 | 2 | 11,0 | 6 | 2,1 | 76,0 | 107 | 56 |
| 65 | 25 | 10 | -4 | 67,08 | 49 | 44 | 2 | 11,8 | 6 | 1,1 | 76,1 | 113 | 57 |
| 70 | 25 | 5 | -5 | 67,91 | 50 | 45 | 2 | 12,2 | 5 | 0,7 | 76,2 | 124 | 60 |
| | | | | | | | | | | | | | |
| 45 | 35 | 20 | -4 | 64,73 | 49 | 44 | 2 | 10,8 | 6 | 2,1 | 75,8 | 104 | 56 |
| 55 | 35 | 10 | -4 | 66,47 | 49 | 44 | 2 | 11,6 | 6 | 1,2 | 76,0 | 108 | 55 |
| 60 | 35 | 5 | -5 | 67,25 | 49 | 44 | 2 | 12,0 | 6 | 0,8 | 76,1 | 120 | 60 |
| | | | | | | | | | | | | | |
| 35 | 45 | 20 | -4 | 64,04 | 49 | 44 | 2 | 10,5 | 6 | 2,1 | 75,7 | 101 | 56 |
| 45 | 45 | 10 | -4 | 65,82 | 49 | 44 | 2 | 11,3 | 6 | 1,2 | 75,9 | 103 | 54 |
| 50 | 45 | 5 | -5 | 66,56 | 49 | 44 | 2 | 11,7 | 6 | 0,8 | 76,0 | 116 | 59 |
| | | | | | | | | | | | | | |
| 35 | 55 | 10 | -4 | 65,07 | 49 | 44 | 2 | 10,9 | 6 | 1,2 | 75,8 | 101 | 54 |
| 40 | 55 | 5 | -5 | 65,79 | 49 | 44 | 2 | 11,4 | 6 | 0,9 | 75,9 | 113 | 59 |
| | | | | | | | | | | | | | |
| 25 | 65 | 10 | -4 | 64,18 | 49 | 44 | 2 | 10,6 | 6 | 1,2 | 75,7 | 101 | 56 |
| 30 | 65 | 5 | -5 | 64,93 | 49 | 44 | 2 | 11,0 | 6 | 0,8 | 75,9 | 109 | 58 |
| | | | | | | | | | | | | | |
| 15 | 75 | 10 | -4 | 63,16 | 49 | 44 | 2 | 10,2 | 6 | 1,0 | 75,7 | 100 | 57 |
| 20 | 75 | 5 | -5 | 63,97 | 49 | 44 | 2 | 10,6 | 6 | 0,8 | 75,8 | 105 | 58 |
| | | | | | | | | | | | | | |
| 10 | 85 | 5 | -5 | 62,89 | 50 | 45 | 2 | 10,2 | 6 | 0,6 | 75,8 | 102 | 58 |

| HFO-1234yf | HFO-1234ze | HFO-1336yf | Temp sortie évap (°C) | Temp sortie comp (°C) | T sortie cond (°C) | Temp entrée détend (°C) | evap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| 75 | 0 | 25 | -3 | 57,94 | 48 | 43 | 2 | 10,7 | 5 | 3,8 | 76,5 | 103 | 53 |
| 80 | 0 | 20 | -3 | 58 | 48 | 43 | 2 | 11,1 | 5 | 3,3 | 76,7 | 107 | 53 |
| 85 | 0 | 15 | -4 | 57,95 | 49 | 44 | 2 | 11,6 | 5 | 2,6 | 77,0 | 112 | 53 |
| 90 | 0 | 10 | -4 | 57,81 | 49 | 44 | 2 | 12,0 | 5 | 1,9 | 77,2 | 116 | 53 |
| 95 | 0 | 5 | -4 | 57,56 | 50 | 45 | 2 | 12,4 | 5 | 1,0 | 77,4 | 121 | 54 |
| | | | | | | | | | | | | | |
| 75 | 5 | 20 | -3 | 58,02 | 48 | 43 | 2 | 11,1 | 5 | 3,2 | 76,7 | 106 | 53 |
| 85 | 5 | 10 | -4 | 58,08 | 49 | 44 | 2 | 11,9 | 5 | 1,9 | 77,1 | 115 | 53 |
| | | | | | | | | | | | | | |
| 65 | 15 | 20 | -3 | 58,69 | 48 | 43 | 2 | 10,9 | 5 | 3,1 | 76,5 | 105 | 53 |
| 75 | 15 | 10 | -4 | 58,65 | 49 | 44 | 2 | 11,8 | 5 | 1,9 | 76,9 | 113 | 53 |
| 80 | 15 | 5 | -4 | 58,47 | 50 | 45 | 2 | 12,2 | 5 | 1,1 | 77,1 | 119 | 54 |
| | | | | | | | | | | | | | |
| 55 | 25 | 20 | -4 | 59,16 | 48 | 43 | 2 | 10,8 | 5 | 3,0 | 76,3 | 103 | 53 |
| 65 | 25 | 10 | -4 | 59,2 | 49 | 44 | 2 | 11,6 | 5 | 1,9 | 76,7 | 110 | 53 |
| 70 | 25 | 5 | -4 | 58,97 | 50 | 45 | 2 | 12,0 | 5 | 1,2 | 76,9 | 117 | 54 |
| | | | | | | | | | | | | | |
| 45 | 35 | 20 | -4 | 59,57 | 48 | 43 | 2 | 10,5 | 6 | 2,8 | 76,1 | 100 | 54 |
| 55 | 35 | 10 | -4 | 59,74 | 49 | 44 | 2 | 11,4 | 5 | 1,8 | 76,5 | 106 | 52 |
| 60 | 35 | 5 | -4 | 59,68 | 49 | 44 | 2 | 11,8 | 5 | 1,2 | 76,7 | 115 | 55 |
| | | | | | | | | | | | | | |
| 45 | 45 | 10 | -4 | 60,12 | 49 | 44 | 2 | 11,1 | 5 | 1,7 | 76,3 | 103 | 53 |
| 50 | 45 | 5 | -4 | 60,24 | 49 | 44 | 2 | 11,5 | 5 | 1,3 | 76,6 | 113 | 55 |
| | | | | | | | | | | | | | |
| 35 | 55 | 10 | -4 | 60,63 | 49 | 44 | 2 | 10,8 | 6 | 1,7 | 76,2 | 104 | 54 |
| 40 | 55 | 5 | -4 | 60,73 | 49 | 44 | 2 | 11,2 | 5 | 1,2 | 76,4 | 110 | 56 |
| | | | | | | | | | | | | | |
| 25 | 65 | 10 | -4 | 60,94 | 49 | 44 | 2 | 10,5 | 6 | 1,5 | 76,0 | 102 | 56 |
| 30 | 65 | 5 | -4 | 61,13 | 49 | 44 | 2 | 10,9 | 5 | 1,1 | 76,2 | 107 | 56 |
| | | | | | | | | | | | | | |
| 15 | 75 | 10 | -4 | 61,06 | 49 | 44 | 2 | 10,1 | 6 | 1,2 | 75,9 | 100 | 56 |
| 20 | 75 | 5 | -5 | 61,43 | 49 | 44 | 2 | 10,6 | 6 | 0,9 | 76,0 | 104 | 56 |
| | | | | | | | | | | | | | |
| 10 | 85 | 5 | -5 | 61,49 | 50 | 45 | 2 | 10,2 | 6 | 0,7 | 75,9 | 101 | 57 |

| | | | Temp sortie évap (°C) | Temp sortie comp (°C) | T sortie cond (°C) | Temp entrée détend (°C) | evap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| HFO-1234yf | HFC-134a | HFO-1336yf | | | | | | | | | | | |
| 75 | 5 | 20 | -3 | 58,41 | 48 | 43 | 2 | 11,2 | 5 | 3,4 | 76,8 | 108 | 53 |
| 85 | 5 | 10 | -4 | 58,18 | 49 | 44 | 2 | 12,1 | 5 | 2,0 | 77,2 | 118 | 54 |
| 90 | 5 | 5 | -4 | 57,91 | 50 | 45 | 3 | 12,5 | 5 | 1,1 | 77,4 | 123 | 54 |
| | | | | | | | | | | | | | |
| 55 | 15 | 30 | -3 | 59,31 | 47 | 42 | 2 | 10,6 | 5 | 4,4 | 76,4 | 101 | 53 |
| 65 | 15 | 20 | -3 | 59,37 | 48 | 43 | 2 | 11,4 | 5 | 3,5 | 76,8 | 110 | 54 |
| 75 | 15 | 10 | -4 | 59,08 | 49 | 44 | 2 | 12,2 | 5 | 2,1 | 77,2 | 120 | 54 |
| 80 | 15 | 5 | -4 | 58,74 | 50 | 45 | 3 | 12,7 | 5 | 1,1 | 77,5 | 125 | 55 |
| | | | | | | | | | | | | | |
| 45 | 25 | 30 | -3 | 60,48 | 47 | 42 | 2 | 10,7 | 5 | 4,4 | 76,3 | 103 | 54 |
| 55 | 25 | 20 | -3 | 60,46 | 48 | 43 | 2 | 11,5 | 5 | 3,4 | 76,7 | 112 | 54 |
| 65 | 25 | 10 | -4 | 60,16 | 49 | 44 | 2 | 12,4 | 5 | 2,0 | 77,2 | 122 | 55 |
| 70 | 25 | 5 | -4 | 59,81 | 50 | 45 | 3 | 12,8 | 5 | 1,1 | 77,4 | 127 | 55 |
| | | | | | | | | | | | | | |
| 35 | 35 | 30 | -3 | 61,69 | 47 | 42 | 2 | 10,8 | 5 | 4,3 | 76,2 | 105 | 55 |
| 45 | 35 | 20 | -3 | 61,47 | 48 | 43 | 2 | 11,7 | 5 | 3,3 | 76,7 | 114 | 55 |
| 55 | 35 | 10 | -4 | 61,37 | 49 | 44 | 2 | 12,5 | 5 | 2,0 | 77,1 | 124 | 56 |
| 60 | 35 | 5 | -4 | 61 | 50 | 45 | 3 | 12,9 | 5 | 1,1 | 77,3 | 129 | 56 |
| | | | | | | | | | | | | | |
| 25 | 45 | 30 | -3 | 62,98 | 48 | 43 | 2 | 10,9 | 6 | 4,0 | 76,1 | 107 | 56 |
| 35 | 45 | 20 | -3 | 62,72 | 48 | 43 | 2 | 11,8 | 5 | 3,1 | 76,5 | 116 | 56 |
| 45 | 45 | 10 | -4 | 62,69 | 49 | 44 | 2 | 12,6 | 5 | 1,8 | 77,0 | 126 | 57 |
| 50 | 45 | 5 | -4 | 62,33 | 50 | 45 | 3 | 13,0 | 5 | 1,0 | 77,2 | 131 | 57 |
| | | | | | | | | | | | | | |
| 15 | 55 | 30 | -3 | 63,93 | 48 | 43 | 2 | 10,9 | 6 | 3,8 | 76,1 | 108 | 57 |
| 25 | 55 | 20 | -4 | 64,09 | 48 | 43 | 2 | 11,8 | 5 | 2,9 | 76,4 | 118 | 58 |
| 35 | 55 | 10 | -4 | 64,07 | 49 | 44 | 2 | 12,6 | 5 | 1,7 | 76,9 | 127 | 58 |
| 40 | 55 | 5 | -5 | 63,76 | 50 | 45 | 3 | 13,0 | 5 | 1,0 | 77,1 | 132 | 58 |
| | | | | | | | | | | | | | |
| 5 | 65 | 30 | -3 | 64,82 | 48 | 43 | 2 | 10,8 | 6 | 3,4 | 76,0 | 109 | 58 |
| 15 | 65 | 20 | -4 | 65,32 | 48 | 43 | 2 | 11,7 | 5 | 2,6 | 76,3 | 119 | 59 |
| 25 | 65 | 10 | -4 | 65,46 | 49 | 44 | 2 | 12,6 | 5 | 1,6 | 76,7 | 128 | 59 |
| 30 | 65 | 5 | -5 | 65,25 | 50 | 45 | 3 | 13,0 | 5 | 0,9 | 76,9 | 133 | 59 |
| | | | | | | | | | | | | | |
| 5 | 75 | 20 | -4 | 66,57 | 49 | 44 | 2 | 11,6 | 5 | 2,3 | 76,2 | 119 | 60 |
| 15 | 75 | 10 | -4 | 66,8 | 49 | 44 | 2 | 12,5 | 5 | 1,4 | 76,6 | 129 | 60 |
| 20 | 75 | 5 | -5 | 66,77 | 50 | 45 | 2 | 13,0 | 5 | 0,8 | 76,7 | 134 | 61 |
| | | | | | | | | | | | | | |
| 5 | 85 | 10 | -4 | 68,07 | 49 | 44 | 2 | 12,4 | 5 | 1,2 | 76,4 | 129 | 62 |
| 10 | 85 | 5 | -5 | 68,23 | 50 | 45 | 2 | 12,9 | 5 | 0,7 | 76,6 | 134 | 62 |
| | | | | | | | | | | | | | |
| 5 | 90 | 5 | -5 | 69,02 | 50 | 45 | 2 | 12,8 | 5 | 0,6 | 76,5 | 133 | 62 |

| HFC-134 | HFO-1336yf | HFC-263fb | Temp sortie évap (°C) | Temp sortie comp (°C) | T sortie cond (°C) | Temp entrée détend (°C) | evap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| 45 | 5 | 50 | -5 | 62,67 | 49 | 44 | 2 | 9,6 | 6 | 0,5 | 75,9 | 98 | 59 |
| | | | | | | | | | | | | | |
| 55 | 10 | 35 | -5 | 63,07 | 50 | 45 | 2 | 9,8 | 6 | 0,6 | 75,8 | 100 | 59 |
| 55 | 5 | 40 | -5 | 63,38 | 50 | 45 | 2 | 9,9 | 6 | 0,4 | 75,9 | 101 | 59 |
| | | | | | | | | | | | | | |
| 65 | 20 | 15 | -5 | 63,22 | 49 | 44 | 2 | 9,9 | 6 | 0,9 | 75,6 | 100 | 59 |
| 65 | 10 | 25 | -5 | 63,82 | 50 | 45 | 2 | 10,1 | 6 | 0,5 | 75,7 | 103 | 60 |
| 65 | 5 | 30 | -5 | 64,06 | 50 | 45 | 2 | 10,2 | 6 | 0,3 | 75,9 | 105 | 60 |
| | | | | | | | | | | | | | |
| 75 | 20 | 5 | -5 | 63,91 | 50 | 45 | 2 | 10,1 | 6 | 0,7 | 75,6 | 102 | 59 |
| 75 | 10 | 15 | -5 | 64,49 | 50 | 45 | 2 | 10,3 | 6 | 0,3 | 75,7 | 106 | 60 |
| 75 | 5 | 20 | -5 | 64,85 | 50 | 45 | 2 | 10,4 | 6 | 0,2 | 75,8 | 107 | 61 |
| | | | | | | | | | | | | | |
| 85 | 10 | 5 | -5 | 65,13 | 50 | 45 | 2 | 10,4 | 6 | 0,3 | 75,7 | 108 | 61 |
| 85 | 5 | 10 | -5 | 65,58 | 50 | 45 | 2 | 10,5 | 6 | 0,1 | 75,8 | 109 | 61 |
| | | | | | | | | | | | | | |
| 90 | 5 | 5 | -5 | 65,88 | 50 | 45 | 2 | 10,5 | 6 | 0,1 | 75,7 | 110 | 62 |

| HFC-134a | HFO-1336yf | HFC-263fb | Temp sortie évap (°C) | Temp sortie comp (°C) | T sortie cond (°C) | Temp entrée détend (°C) | évap P (bar) | cond P (bar) | Taux (p/p) | glide (°C) | rendement comp | % CAP | %COP / COPLorenz |
|---|---|---|---|---|---|---|---|---|---|---|---|---|---|
| HFO-1234ze | | | -5 | 62 | 50 | 45 | 1,8 | 10,0 | 5,6 | 0,0 | 76 | 100 | 58 |
| 35 | 5 | 60 | -4 | 63,28 | 49 | 44 | 2 | 9,7 | 6 | 1,3 | 76,1 | 99 | 59 |
| 45 | 20 | 35 | -4 | 63,9 | 48 | 43 | 2 | 10,0 | 6 | 2,2 | 75,8 | 101 | 58 |
| 45 | 10 | 45 | -4 | 64,3 | 49 | 44 | 2 | 10,2 | 6 | 1,6 | 76,0 | 104 | 59 |
| 45 | 5 | 50 | -4 | 64,53 | 49 | 44 | 2 | 10,2 | 6 | 1,4 | 76,1 | 105 | 59 |
| 55 | 30 | 15 | -3 | 64,44 | 48 | 43 | 2 | 10,3 | 6 | 3,1 | 75,7 | 102 | 58 |
| 55 | 20 | 25 | -4 | 65,08 | 48 | 43 | 2 | 10,5 | 6 | 2,3 | 75,9 | 106 | 59 |
| 55 | 10 | 35 | -4 | 65,49 | 49 | 44 | 2 | 10,7 | 6 | 1,6 | 76,0 | 109 | 60 |
| 55 | 5 | 40 | -4 | 65,71 | 49 | 44 | 2 | 10,8 | 6 | 1,3 | 76,1 | 111 | 60 |
| 65 | 30 | 5 | -3 | 65,26 | 48 | 43 | 2 | 10,6 | 6 | 3,1 | 75,9 | 107 | 58 |
| 65 | 20 | 15 | -4 | 65,99 | 49 | 44 | 2 | 11,0 | 6 | 2,2 | 76,0 | 111 | 59 |
| 65 | 10 | 25 | -4 | 66,58 | 49 | 44 | 2 | 11,2 | 6 | 1,5 | 76,1 | 115 | 60 |
| 65 | 5 | 30 | -4 | 66,82 | 49 | 44 | 2 | 11,3 | 6 | 1,2 | 76,2 | 116 | 61 |
| 75 | 20 | 5 | -4 | 66,78 | 49 | 44 | 2 | 11,4 | 6 | 2,1 | 76,1 | 116 | 60 |
| 75 | 10 | 15 | -4 | 67,56 | 49 | 44 | 2 | 11,7 | 6 | 1,3 | 76,2 | 121 | 61 |
| 75 | 5 | 20 | -5 | 67,86 | 49 | 44 | 2 | 11,8 | 5 | 1,0 | 76,2 | 122 | 61 |
| 85 | 10 | 5 | -4 | 68,42 | 49 | 44 | 2 | 12,2 | 5 | 1,1 | 76,3 | 126 | 62 |
| 85 | 5 | 10 | -5 | 68,71 | 50 | 45 | 2 | 12,3 | 5 | 0,7 | 76,3 | 128 | 62 |
| 90 | 5 | 5 | -5 | 69,26 | 50 | 45 | 2 | 12,5 | 5 | 0,6 | 76,3 | 131 | 63 |

## Revendications

1. Composition comprenant du 2,3,3,4,4,4-hexafluorobut-1-ène en mélange avec un ou plusieurs composés choisi (s) parmi le 1,3,3,3-tétrafluoropropène, le 2,3,3,3-tétrafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le 1,1,1,2,3,3,3-heptafluoropropane, le 1,1-difluaroéthane, le 1,1,1-trifluoropropane, l'isobutane, le propane, et les mélanges de ceux-ci.

2. Composition selon la revendication 1, dans laquelle le ou les composés est ou sont choisi (s) parmi le 1,3,3,3-tétrafluoropropène, le 2,3,3,3-tétrafluoropropène, le 1,1,1,2-tétrafluoroéthane, le 1,1,2,2-tétrafluoroéthane, le 1,1-difluoroéthane, le 1,1,1-trifluoropropane et les mélanges de ceux-ci.

3. Composition selon l'une des revendications 1 à 2, comprenant ou de préférence consistant en :

   - un mélange de 2,3,3,4,4,4-hexafluorobut-1-ène et de 1,3,3,3-tétrafluoropropène ; ou

- un mélange de 2,3,3,4,4,4-hexafluorobut-1-ène et de 1,1,1-trifluoropropane ; ou
- un mélange de 2,3,3,4,4,4-hexafluorobut-1-ène et de 1,1,2,2-tétrafluoroéthane ; ou
- un mélange de 2,3,3,4,4,4-hexafluorobut-1-ène et de 1,1,1,2-tétrafluoroéthane ; ou
- un mélange de 2,3,3,4,4,4-hexafluorobut-1-ène et de 1,1-difluoroéthane ; ou
- un mélange de 2,3,3,4,4,4-hexafluorobut-1-ène, de 1,1,1,2-tétrafluoroéthane et de 1,3,3,3-tétrafluoropropène ; ou
- un mélange de 2,3,3,4,4,4-hexafluorobut-1-ène, de 1,1,1,2-tétrafluoroéthane et de 1,1,1-trifluoropropane ;
- un mélange de 2,3,3,4,4,4-hexafluorobut-1-ène, de 1,1,1,2-tétrafluoroéthane et de 1,1-difluoroéthane.
- un mélange de 2,3,3,4,4,4-hexafluorobut-1-ène, de 1,1,2,2-tétrafluoroéthane et de 1,3,3,3-tétrafluoropropène ; ou
- un mélange de 2,3,3,4,4,4-hexafluorobut-1-ène, de 1,1,2,2-tétrafluoroéthane et de 1,1,1-trifluoropropane.

4. Composition selon l'une des revendications 1 à 3, dont la différence entre la pression de saturation liquide et la pression de saturation vapeur à une température de -5°C est inférieure ou égaie à 10 % de la pression de saturation liquide.

5. Composition selon l'une des revendications 1 à 4, qui est non-inflammable.

6. Utilisation de la composition selon l'une des revendications 1 à 5, en tant que fluide de transfert de chaleur.

7. Composition de transfert de chaleur, comprenant la composition selon l'une des revendications 1 à 5 en tant que fluide de transfert de chaleur, ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

8. Installation de transfert de chaleur comprenant un circuit de compression de vapeur contenant une composition selon l'une des revendications 1 à 5 en tant que fluide de transfert de chaleur ou contenant une composition de transfert de chaleur selon la revendication 7.

9. Installation selon la revendication 8, choisie parmi les installations mobiles ou stationnaires de chauffage par pompe à chaleur, de climatisation, de réfrigération, de congélation et les cycles de Rankine, et qui de préférence est une installation de réfrigération pour container.

10. Procédé de chauffage ou de refroidissement d'un fluide ou d'un corps au moyen d'un circuit de compression de vapeur contenant un fluide de transfert de chaleur, ledit procédé comprenant successivement l'évaporation du fluides de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 5.

11. Procédé selon la revendication 10 qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou qui est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

12. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un potentiel de réchauffement global GWP inférieur au fluide de transfert de chaleur initial, dans lequel le fluide de transfert de chaleur final est une composition selon l'une des revendications 1 à 5.

**Patentansprüche**

1. Zusammensetzung, umfassend 2,3,3,4,4,4-Hexafluor-but-1-en im Gemisch mit einer oder mehreren Verbindungen, die aus 1,3,3,3-Tetrafluorpropen, 2,3,3,3-Tetrafluorpropen, 1,1,3,3-Tetrafluorpropen, 3,3,3-Trifluorpropen, 2,3,3-Trifluorpropen, 1,1,1,2-Tetrafluorethan, 1,1,2,2-Tetrafluorethan, Pentafluorethan, 1,1,1,2,3,3,3-Heptafluorpropan, 1,1-Difluorethan, 1,1,1-Trifluorpropan, Isobutan, Propan und Mischungen davon ausgewählt sind.

2. Zusammensetzung nach Anspruch 1, wobei die Verbindung bzw. die Verbindungen aus 1,3,3,3-Tetrafluorpropen, 2,3,3,3-Tetrafluorpropen, 1,1,1,2-Tetrafluorethan, 1,1,2,2-Tetrafluorethan, 1,1-Difluorethan, 1,1,1-Trifluorpropan und Mischungen davon ausgewählt ist bzw. sind.

3. Zusammensetzung nach einem der Ansprüche 1 bis 2, umfassend oder vorzugsweise bestehend aus:

   - eine(r) Mischung von 2,3,3,4,4,4-Hexafluorbut-1-en und 1,3,3,3-Tetrafluorpropen; oder
   - eine(r) Mischung von 2,3,3,4,4,4-Hexafluorbut-1-en und 1,1,1-Trifluorpropan; oder
   - eine(r) Mischung von 2,3,3,4,4,4-Hexafluorbut-1-en und 1,1,2,2-Tetrafluorethan; oder
   - eine(r) Mischung von 2,3,3,4,4,4-Hexafluorbut-1-en und 1,1,1,2-Tetrafluorethan; oder
   - eine(r) Mischung von 2,3,3,4,4,4-Hexafluorbut-1-en und 1,1-Difluorethan; oder
   - eine(r) Mischung von 2,3,3,4,4,4-Hexafluorbut-1-en, 1,1,1,2-Tetrafluorethan und 1,3,3,3-Tetrafluorpropen; oder
   - eine(r) Mischung von 2,3,3,4,4,4-Hexafluorbut-1-en, 1,1,1,2-Tetrafluorethan und 1,1,1-Trifluorpropan;
   - eine(r) Mischung von 2,3,3,4,4,4-Hexafluorbut-1-en, 1,1,1,2-Tetrafluorethan und 1,1-Difluorethan;
   - eine(r) Mischung von 2,3,3,4,4,4-Hexafluorbut-1-en, 1,1,2,2-Tetrafluorethan und 1,3,3,3-Tetrafluorpropen; oder
   - eine(r) Mischung von 2,3,3,4,4,4-Hexafluorbut-1-en, 1,1,2,2-Tetrafluorethan und 1,1,1-Trifluorpropan.

4. Zusammensetzung nach einem der Ansprüche 1 bis 3, deren Differenz zwischen dem Flüssigkeits-sättigungsdruck und dem Dampfsättigungsdruck bei einer Temperatur von -5°C kleiner gleich 10% des Flüssigkeitssättigungsdrucks ist.

5. Zusammensetzung nach einem der Ansprüche 1 bis 4, die nicht entflammbar ist.

6. Verwendung der Zusammensetzung nach einem der Ansprüche 1 bis 5 als Wärmeübertragungsfluid.

7. Wärmeübertragungszusammensetzung, umfassend die Zusammensetzung nach einem der Ansprüche 1 bis 5 als Wärmeübertragungsfluid sowie ein oder mehrere Additive, die aus Schmiermitteln, Stabilisatoren, Tensiden, Tracern, Fluoreszenzmitteln, Geruchs-mitteln, Solubilisatoren und Mischungen davon ausgewählt sind.

8. Wärmeübertragungsanlage, umfassend einen Dampf-verdichtungskreislauf, der eine Zusammensetzung nach einem der Ansprüche 1 bis 5 als Wärmeübertragungsfluid enthält oder eine Wärmeübertragungszusammensetzung nach Anspruch 7 enthält.

9. Anlage nach Anspruch 8, die aus mobilen oder stationären Wärmepumpenheizanlagen, Klimaanlagen, Kühlanlagen, Gefrieranlagen und Rankine-Zyklen ausgewählt ist und bei der es sich vorzugsweise um eine Containerkühlanlage handelt.

10. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmefluid kondensiert und das Wärmeübertragungsfluid entspannt, wobei es sich bei dem Wärmeübertragungsfluid um eine Zusammensetzung nach einem der Ansprüche 1 bis 5 handelt.

11. Verfahren nach Anspruch 10, bei dem es sich um ein Verfahren zum Abkühlen eines Fluids oder eines Körpers handelt, bei dem die Temperatur des abgekühlten Fluids oder Körpers -15°C bis 15°C, vorzugsweise -10°C bis 10°C und weiter bevorzugt -5°C bis 5°C beträgt; oder bei dem es sich um ein Verfahren zum Erwärmen eines Fluids oder eines Körpers handelt, bei dem die Temperatur des erwärmten Fluids oder Körpers 30°C bis 90°C, vorzugsweise 35°C bis 60°C und weiter bevorzugt 40°C bis 50°C beträgt.

12. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres Treibhauspotential GWP als das anfängliche Wärmeübertragungsfluid aufweist, wobei es sich bei dem letztendlichen Wärmeübertragungsfluid um eine Zusammensetzung nach einem der Ansprüche 1 bis 5 handelt.

**Claims**

1. Composition comprising 2,3,3,4,4,4-hexafluorobut-1-ene mixed with one or more compounds chosen from 1,3,3,3-tetrafluoropropene, 2,3,3,3-tetrafluoropropene, 1,1,3,3-tetrafluoropropene, 3,3,3-trifluoropropene, 2,3,3-trifluoropropene, 1,1,1,2-tetrafluoroethane, 1,1,2,2-tetrafluoroethane, pentafluoroethane, 1,1,1,2,3,3,3-heptafluoropropane, 1,1-difluoroethane, 1,1,1-trifluoropropane, isobutane and propane, and mixtures thereof.

2. Composition according to Claim 1, in which the compound(s) are chosen from 1,3,3,3-tetrafluoropropene, 2,3,3,3-tetrafluoropropene, 1,1,1,2-tetrafluoroethane, 1,1,2,2-tetrafluoroethane, 1,1-difluoroethane and 1,1,1-trifluoropropane, and mixtures thereof.

3. Composition according to either of Claims 1 and 2, comprising or preferably consisting of:

   - a mixture of 2,3,3,4,4,4-hexafluorobut-1-ene and 1,3,3,3-tetrafluoropropene; or
   - a mixture of 2,3,3,4,4,4-hexafluorobut-1-ene and 1,1,1-trifluoropropane; or
   - a mixture of 2,3,3,4,4,4-hexafluorobut-1-ene and 1,1,2,2-tetrafluoroethane; or
   - a mixture of 2,3,3,4,4,4-hexafluorobut-1-ene and 1,1,1,2-tetrafluoroethane; or
   - a mixture of 2,3,3,4,4,4-hexafluorobut-1-ene and 1,1-difluoroethane; or
   - a mixture of 2,3,3,4,4,4-hexafluorobut-1-ene, 1,1,1,2-tetrafluoroethane and 1,3,3,3-tetrafluoropropene; or
   - a mixture of 2,3,3,4,4,4-hexafluorobut-1-ene, 1,1,1,2-tetrafluoroethane and 1,1,1-trifluoropropane;
   - a mixture of 2,3,3,4,4,4-hexafluorobut-1-ene, 1,1,1,2-tetrafluoroethane and 1,1-difluoroethane;
   - a mixture of 2,3,3,4,4,4-hexafluorobut-1-ene, 1,1,2,2-tetrafluoroethane and 1,3,3,3-tetrafluoropropene; or
   - a mixture of 2,3,3,4,4,4-hexafluorobut-1-ene, 1,1,2,2-tetrafluoroethane and 1,1,1-trifluoropropane.

4. Composition according to one of Claims 1 to 3, for which the difference between the saturating liquid pressure and the saturating vapour pressure at a temperature of -5°C is less than or equal to 10% of the saturating liquid pressure.

5. Composition according to one of Claims 1 to 4, which is nonflammable.

6. Use of the composition according to one of Claims 1 to 5, as a heat-transfer fluid.

7. Heat-transfer composition, comprising the composition according to one of Claims 1 to 5 as heat-transfer fluid, and also one or more additives chosen from lubricants, stabilizers, surfactants, tracers, fluorescers, odorous agents and solubilizers, and mixtures thereof.

8. Heat transfer installation comprising a vapour compression circuit containing a composition according to one of Claims 1 to 5 as heat-transfer fluid or containing a heat-transfer composition according to Claim 7.

9. Installation according to Claim 8, chosen from mobile or stationary heat-pump heating, air-conditioning, refrigeration, freezing and Rankine cycle installations, and which is preferably a container refrigeration installation.

10. Process for heating or cooling a fluid or a body by means of a vapour compression circuit containing a heat-transfer fluid, said process successively comprising the evaporation of the heat-transfer fluid, the compression of the heat-transfer fluid, the condensation of the heat fluid and the depressurization of the heat-transfer fluid, in which the heat-transfer fluid is a composition according to one of Claims 1 to 5.

11. Process according to Claim 10, which is a process for cooling a fluid or a body, in which the temperature of the cooled fluid or body is from -15°C to 15°C, preferably from -10°C to 10°C and more particularly preferably from -5°C to 5°C; or which is a process for heating a fluid or a body, in which the temperature of the heated fluid or body is from 30°C to 90°C, preferably from 35°C to 60°C and more particularly preferably from 40°C to 50°C.

12. Process for reducing the environmental impact of a heat-transfer installation comprising a vapour compression circuit containing an initial heat-transfer fluid, said process comprising a step of replacing the initial heat-transfer fluid in the vapour compression circuit with a final transfer fluid, the final transfer fluid having a lower global warming potential GWP than the initial heat-transfer fluid, in which the final heat-transfer fluid is a composition according to one of Claims 1 to 5.

**RÉFÉRENCES CITÉES DANS LA DESCRIPTION**

**Documents brevets cités dans la description**

- US 20090143604 A
- WO 2009085937 A
- US 20090302264 A
- US 20110088418 A